# EUROPÄISCHE PATENTSCHRIFT

(11) **EP 3 837 950 B1**
(45) Veröffentlichungstag und Bekanntmachung des Hinweises auf die Patenterteilung: **07.02.2024**
(21) Anmeldenummer: 20216150.1
(22) Anmeldetag: 21.12.2020
(51) Int. Cl.: A01D 34/00, A01D 34/412, A01D 34/63, A01D 34/68, A01D 34/74, A01D 34/81

(54) **RASENMÄHER**
LAWN MOWER
TONDEUSE À GAZON

(30) Priorität: 20.12.2019 DE 102019220330
(43) Veröffentlichungstag der Anmeldung: 23.06.2021
(73) Patentinhaber: Robert Bosch GmbH, 70442 Stuttgart (DE)
(72) Erfinder: Johnson, William, Ipswich Suffolk, IP6 8JJ (GB); Roberts, Ana-Maria, Bury St Edmunds, IP33 3AR (GB)

(56) Entgegenhaltungen:
- EP-A1- 3 342 268
- EP-A1- 3 549 429
- CN-A- 110 463 436
- DE-U1-202013 006 712

## Beschreibung

### Stand der Technik

Es sind bereits Rasenmäher nach dem Oberbegriff des Anspruchs 1 bekannt, beispielsweise sei auf die EP 3 549 429 A1 verwiesen. Derartige Rasenmäher neigen im Betrieb mitunter zur Geräuschentwicklung bedingt durch ein radiales Spiel zwischen Chassis und Motoraufnahmegehäuse. Zudem sei auf die Druckschriften EP 3 167 703, CN 110 463 436 A und EP 3 342 268 A1 verwiesen.

### Offenbarung der Erfindung

Die Erfindung betrifft einen Rasenmäher, Mit den Merkmalen des Anspruchs 1. Dadurch, dass das oder die Führungsmittel in Umfangsrichtung um die Höhenverstellachse elastisch verlagerbar ausgebildet ist/sind können Momentenkräfte des Motors bzw. der Schneidvorrichtung gedämpft auf die Führungsvorrichtung und/oder das Chassis übertragen werden. Eine Geräuschemission des Rasenmähers im Betrieb wird dadurch verringert, eine Belastung für die Schneidvorrichtung, den Antrieb, die Höhenverstellvorrichtung und/oder das Chassis werden verringert.

Es wird vorgeschlagen, dass der Rasenmäher eine separat vom Chassis ausgebildete Führungsvorrichtung umfasst die ein Führungselement aufweist, das bezogen auf eine Höhenverstellachse der Höhenverstellvorrichtung zur zumindest drehhemmenden Axialführung eines Schiebesitzes und zur zumindest axialhemmenden Rotationsführung eines Drehkörpers der Höhenverstellvorrichtung ausgebildet ist, insbesondere eines den Schiebesitz treibenden Drehkörpers.

Unter einem "Rasenmäher" soll ein Arbeitsgerät zum Verrichten einer Arbeit, insbesondere einer Arbeit im Garten verstanden werden. Unter einem Rasenmäher kann auch ein anderes Gerät verstanden werden, dass dazu eingerichtet ist einen Rasen zu kürzen oder zu stutzen, beispielsweise ein Vertikutierer oder dergleichen. Ein Rasenmäher kann beispielsweise als Schieberasenmäher mit oder ohne Fahrantrieb oder als autonomer Rasenmäher ausgebildet sein. Dazu weist der Rasenmäher typischerweise Räder auf, die das Chassis vom Untergrund abstützen und eine insbesondere widerstandsarmes Bewegen des Rasenmähers über eine Arbeitsfläche ermöglichen.

Unter einem "autonomen Rasenmäher" soll hier insbesondere ein Gerät verstanden werden, das sich selbsttätig in einem Bereich und/oder in einer Umgebung fortbewegt, orientiert und/oder navigiert, insbesondere nach einem Anlernprozess. Der Ausdruck "selbsttätig fortbewegen und/oder orientieren" soll hier insbesondere eine Fortbewegung, eine Orientierung und/oder Navigation des Geräts, insbesondere nach einem Anlernprozess, ohne einen menschlichen Eingriff definieren. Bevorzugt ist der autonomer Rasenmäher dazu vorgesehen, eine als Rasenfläche ausgebildete Arbeitsfläche und/oder eine als Gartenumgebung ausgebildete Arbeitsumgebung abzufahren und/oder zu bearbeiten.

Unter einem "Chassis" soll insbesondere ein Fahrwerk mit daran aufgenommenen Rädern verstanden werden. Diese können lediglich zum Abrollen vorgesehen sein und/oder teilweise oder vollständig angetrieben sein. Das Chassis kann aber auch die Aufhängung und/oder einen Rahmen für andere Fortbewegungs- oder Abstützmittel darstellen die daran aufgenommen sind, beispielweise Gelenkarme für eine einem laufen nachempfundene Fortbewegungsart, ein oder mehrere Rotoren für eine fliegende Fortbewegungsart oder dergleichen. Das Chassis kann als Rahmen für die Aufhängung und/oder Fixierung der Fortbewegungsmittel und/oder weiterer Komponenten des Arbeitsgeräts dienen, wie beispielsweise für eine Energieversorgung, eine Steuer- oder Regelung, eine Karosserie, für Arbeits- und Fortbewegungsantriebe und/oder dergleichen. Am Chassis Räder sind insbesondere angetriebene Räder zum Abstützten des Chassis vom Untergrund aufgenommen. Das Chassis des Rasenmähers ist zur Aufnahme der Höhenverstellvorrichtung, des Motors und des Motoraufnahmegehäuses ausgebildet ist. Zumindest ein Teil der Höhenverstellvorrichtung ist fest mit dem Chassis verbunden.

Unter einer "Höhenverstellvorrichtung" kann auch eine Höhenverstelleinheit verstanden werden. Sie ist zu einer Einstellung einer Arbeitshöhe des Rasenmähers vorgesehen. Vorzugsweise ist sie zu einer Einstellung einer Arbeitshöhe, insbesondere einer Schnitthöhe, der Schneidvorrichtung oder eines von einer Werkzeugaufnahme aufgenommenen Werkzeugs relativ zu einem Untergrund vorgesehen ist. Eine Einstellung kann dabei manuell durch einen Bediener, automatisch, oder manuell veranlasst und maschinell umgesetzt, beispielsweise über einen Höhenverstellmotor, erfolgen. Bevorzugt ist die Höhenverstellvorrichtung zu einer werkzeuglosen Einstellung einer Arbeitshöhe, insbesondere einer Schnitthöhe, eines von der Werkzeugaufnahme aufgenommenen Werkzeugs relativ zu einem Untergrund und/oder relativ zum Chassis vorgesehen. Die Höhenverstellvorrichtung ist dazu eingerichtet die Schneidvorrichtung zusammen mit dem Motoraufnahmegehäuse relativ zum Chassis zu verlagern. Die Arbeitshöhe ist dabei vorzugsweise durch eine parallel zu einem Untergrund und/oder einer Standebene des autonomen Arbeitsgeräts verlaufende Ebene definiert, in welcher ein tiefster Punkt eines Werkzeugs liegt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Mittels der Höhenverstelleinheit lässt sich vorteilhaft die Antriebseinheit und/oder das die Antriebseinheit aufnehmende Motoraufnahmegehäuse höhenverstellen. Insbesondere am Motoraufnahmegehäuse können zudem ein Fangschutz insbesondere zum Auffangen sich lösender Teile der Schneidvorrichtung.

Unter einer einem "Schiebesitz" bzw. einer "Abstützeinheit" soll vorzugsweise eine Einheit verstanden werden, die zur Abstützung von Kräften, insbesondere zur Abstützung von Kräften der Antriebseinheit und/oder der Werkzeugaufnahme und/oder des Werkzeugs und/oder des die Antriebseinheit aufnehmenden Motorgehäuses, vorgesehen ist. Darunter sind insbesondere Trage- und/oder Haltekräfte beispielsweise durch die Gewichtskraft und/oder Betriebskräfte der Antriebseinheit und/oder Werkzeugaufnahme und/oder des Werkzeugs zu verstehen. Im regulären Betrieb können dies beispielsweise Beschleunigungs- und Abbremskräfte der Antriebseinheit, insbesondere aber Schwingungen oder Vibrationen und/oder dergleichen insbesondere der der Antriebseinheit und/oder der Werkzeugaufnahme und/oder des Werkzeugs, sein. Es können Kräfte sein, die beispielsweise durch eine Unwucht der Werkzeugaufnahme, insbesondere einer als Drehscheibe ausgebildeten Werkzeugaufnahme und/oder durch das oder die an der Werkzeugaufnahme fixierten Werkzeuge hervorgerufen sind, und/oder dergleichen. Eine Unwucht kann beispielsweise verursacht sein durch Fertigungstoleranzen der Werkzeuge, können mitunter insbesondere an der Werkzeugaufnahme entstehen durch ein stärker verschlissenes und/oder durch ein abgefallenes Werkzeug insbesondere einer Vielzahl von Werkzeugen, bevorzugt von einer Vielzahl von an der Werkzeugaufnahme vorgesehenen Werkzeugen und/oder dergleichen. Ferner können Druck-, Stoß- und/oder Schlagkräfte die insbesondere auf die Werkzeugaufnahme und/oder das Werkzeug einwirken durch die Abstützeinheit abgestützt werden, beispielsweise beim Schneiden oder Anschneiden eines harten Gegenstands. Es können auch andere Kräften die axial, radial und/oder in Umfangsrichtung zumindest mittelbar auf die Werkzeugaufnahme einwirken durch die Abstützeinheit abgestützt werden. Vorzugsweise stützt die Abstützeinheit diese Kräfte zumindest mittelbar auf das Chassis ab. Bevorzugt ist die Abstützeinheit höhenverstellbar ausgebildet. Sie ist bevorzugt axialverschieblich lineargeführt.

Eine "Führungsvorrichtung" kann zumindest zur Drehhemmung der Abstützeinheit bzw. des Schiebesitzes, insbesondere zur Drehhemmung des mit der Abstützeinheit verbundenen Motoraufnahmegehäuses und/oder Motorgehäuses des Motors, vorgesehen sein. Sie umfasst insbesondere zumindest ein Führungselement. Die Führungsvorrichtung kann zur Spielvermeidung zwischen der Abstützeinheit und der Führungsvorrichtung ausgebildet sein. Die Führungsvorrichtung bzw. ein Führungselement kann beispielsweise einen Schiebesitz der Höhenverstelleinheit, insbesondere einen von der Abstützeinheit ausgebildeten Schiebesitz führen, insbesondere zumindest drehgehemmt führen. Die Führungsvorrichtung bzw. ein Führungselement weist vorteilhaft Führungsmittel auf das/die umfangselastisch, insbesondere umfangselastisch drehhemmend ausgebildet ist/sind. Sie sind zur drehhemmenden und axialen Führung um bzw. in Höhenverstellachsrichtung zumindest des Motorgehäuses, insbesondere des Motoraufnahmegehäuses, bevorzugt des Schiebesitzes bzw. der Abstützeinheit relativ zum Chassis vorgesehen. Sie sind vorteilhaft in Umfangsrichtung um die Höhenverstellachse elastisch verlagerbar ausgebildet.

Vorteilhaft können Toleranzabweichungen insbesondere bei der Herstellung des Chassis und/oder Schiebesitzes gröber gewählt werden. Eine Geräuschemission des Rasenmähers kann verbessert werden. Eine Vibrationsübertragung von Schneidvorrichtung und/oder Motor auf das Chassis wird verringert. Die Belastung für die Schneidvorrichtung, den Antrieb, die Höhenverstellvorrichtung und/oder das Chassis kann verringert werden.

Schiebesitz und Drehkörper weisen korrespondierende Gewinde auf, so dass durch eine Drehung des Drehkörpers eine Linearverschiebung des Schiebesitzes erfolgt. Insbesondere umgibt der Drehkörper den Schiebesitz. Dazu weist der Drehkörper ein Außengewinde und der Schiebesitz ein Innengewinde auf. Prinzipiell kann der Drehkörper auch den Schiebesitz umgeben. Dann könnte der Schiebesitz ein Innengewinde und der Drehkörper ein Außengewinde aufweisen. Alternativ können Schiebesitz und Drehkörper auch jeweils Außengewinde oder eine andere Konfiguration aufweisen.

Es wird vorgeschlagen, dass die Führungsvorrichtung mehrere, insbesondere zwei Führungselemente aufweist, insbesondere bezogen auf die Höhenverstellachse einander gegenüberliegende Führungselemente. Dadurch kann eine sichere Führung beispielsweise ohne Verkippen gewährleistet werden. Eine Montage ist durch die Separierbarkeit der Führungselemente gut möglich.

Es wird vorgeschlagen, dass die Führungsvorrichtung bzw. Führungselemente fest mit dem Chassis verbindbar sind, insbesondere verschraubt und/oder formschlüssig verbunden. Dadurch kann eine sichere Kraftübertragung von der Führungsvorrichtung bzw. dem/den Führungselement(en) auf das Chassis erfolgen.

Es wird vorgeschlagen, dass die Führungsvorrichtung zur beabstandenden und/oder schwingungsentkoppelnden Aufnahme der Höhenverstellvorrichtung am Chassis vorgesehen ist, insbesondere zur beabstandenden und/oder schwingungsentkoppelnden, tragenden und abstützenden Aufnahme der Höhenverstellvorrichtung am Chassis, bevorzugt zur beabstandenden und/oder schwingungsentkoppelnden, tragenden und abstützenden Aufnahme zumindest der Höhenverstellvorrichtung, des Motors und der Schneidvorrichtung am Chassis. Dadurch kann eine Vibrationsübertragung von der Schneidvorrichtung und/oder der Antriebseinheit auf das Chassis reduziert und/oder eine Geräuschentwicklung am/durch den Rasenmäher verringert werden.

Es wird vorgeschlagen, dass die Führungsvorrichtung bzw. das/die Führungselemente) zumindest ein, bevorzugt mehrere elastisch verlagerbare(s) Führungsmittel aufweist, insbesondere axial, radial und/oder umfangselastisch verlagerbare(s) Führungsmittel, insbesondere ausgebildet verlagerungshemmend in Axial- oder Radial- oder Umfangsrichtung bezogen auf eine Höhenverstellachse der Höhenverstellvorrichtung. Durch die elastische Verlagerbarkeit kann eine Dämpfende Wirkung erzielt werden. Kräfte können abgefedert ans Chassis übertragen werden. Dies schont die Beteiligten Komponenten des Rasenmähers, insbesondere das Chassis, die Höhenverstellvorrichtung, das Motoraufnahmegehäuse, den Motor und/oder die Schneidvorrichtung. Insbesondere bei hoher Belastung oder Überlast kann die Krafteinwirkung auf die beteiligten Komponenten gedämpft werden. Klappern oder dergleichen kann vermieden werden. Eine Geräuschemission des Rasenmähers wird verbessert.

Es wird vorgeschlagen, dass das/die Führungsmittel zumindest zur drehhemmenden Axialführung des Schiebesitzes umfangselastisch verlagerbar, insbesondere umfangs- und radialelastisch verlagerbar ausgebildet ist/sind. Dadurch wird gleichsam eine Geräuschemission zumindest verringert. Durch die radialelastische Verlagerbarkeit können nicht nur Momentenkräfte, sondern auch Radiale Kräfte gedämpft oder abgefedert werden.

Es wird vorgeschlagen, das/die Führungsmittel laschenartig am Führungselement angebunden, insbesondere umfangs- und radialelastisch verlagerbar am Führungselement angebunden ist/sind. Diese Anbindung ermöglicht eine günstige konstruktive Form. Es werden keine zusätzlichen Federelemente oder dergleichen benötigt. Eine Einstückigkeit mit dem Führungselement ist leicht zu erreichen. Eine Entformbarkeit verhältnismäßig einfach.

Es wird vorgeschlagen, dass das/die Führungsmittel als Führungsprofil, insbesondere als Führungsschiene, insbesondere als Gleitführungsschiene ausgebildet ist/sind. Dadurch kann die Kraftübertragung flächig erfolgen. Eine axiale Führung ist einfach möglich.

Es wird vorgeschlagen, dass am Schiebesitz zumindest ein bevorzugt mehrere korrespondierende(s) in Umfangsrichtung und/oder in Radialrichtung relativ zur Höhenverstellachse nicht-elastisch verlagerbare(s) Führungsmittel, insbesondere korrespondierende Führungsmittel zu den Führungsmitteln der Führungsvorrichtung, vorgesehen sind, insbesondere als Führungsprofil, insbesondere als Führungsschiene, bevorzugt als Gleitführungsschiene ausgebildete Führungsmittel. Vorteilhaft sind die Führungsmittel des Schiebesitzes und der Führungselemente spielfrei zueinander ausgebildet, insbesondere vorgespannt. Dadurch kann eine Geräuschentwicklung z.B. Klappern vermieden werden, der Freiheitgrad der Beweglichkeit des Schiebesitzes wird definiert eingeschränkt.

Es wird vorgeschlagen, dass das/die Führungsmittel einstückig mit dem Führungselement bzw. Schiebesitz ausgebildet ist/sind. Vorteilhaft kann dadurch zumindest die Teilezahl reduziert werden und/oder die Stabilität des Führungsmittels und Führungselements erhöht werden.

Es wird vorgeschlagen, dass zwischen dem Chassis und einem Motorgehäuse des Motors, insbesondere zwischen dem Chassis und einem Motoraufnahmegehäuse, bevorzugt zwischen dem Chassis und einer Abstützeinheit bzw. einem Schiebesitz zum Halten und Tragen des Motors und/oder des Motoraufnahmegehäuse, Führungsmittel zur drehhemmenden und axialen Führung zumindest des Motorgehäuses, insbesondere des Motoraufnahmegehäuse, bevorzugt des Schiebesitzes relativ zum Chassis um bzw. in Höhenverstellachsrichtung vorgesehen sind, wobei das oder die Führungsmittel in Umfangsrichtung um die Höhenverstellachse elastisch verlagerbar ausgebildet sind.

Dadurch, dass die Führungsmittel in Umfangsrichtung um die Höhenverstellachse elastisch verlagerbar ausgebildet ist/sind können Momentenkräfte des Motors bzw. der Schneidvorrichtung gedämpft auf die Führungsvorrichtung und/oder das Chassis übertragen werden. Vorteilhaft ist die Führungsvorrichtung fest mit dem Chassis verbunden, beispielsweise durch Formschluss und/oder Reibschluss und/oder dergleichen. Die Formschlussmittel könnten aber auch einstückig mit dem Chassis ausgebildet sein und relativ dazu elastisch verlagerbar ausgebildet sein. Vorteilhaft können nebst Momenten- auch Radialkräfte gedämpft auf die Führungsvorrichtung und/oder das Chassis übertragen werden. Führungsmittel könnten auch einstückig mit dem Schiebesitz und/oder dem Chassis ausgebildet sind.

Es wird vorgeschlagen, dass das oder die Führungsmittel quer zur, insbesondere tangential, bzw. in Umfangsrichtung, und/oder radial zur Höhenverstellachse elastisch verlagerbar ausgebildet sind. Dadurch können Sie eine umfangselastische Aufnahme insbesondere der Abstützeinheit bzw. des Schiebesitzes ermöglichen. Eine axiale Führung kann sichergestellt werden. Eine drehhemmende Wirkung kann erzielt werden. Unter drehemmend ist zu verstehen, dass eine elastische Nachgiebigkeit in Drehrichtung insbesondere zur federnden und/oder dämpfenden Abstützung möglich ist, jedoch eine Drehung im Wesentlichen unterbunden ist. Beispielsweise ist eine Drehhemmung nach wenigen oder einigen Gradwinkeln unterbunden. Insbesondere ist eine Achtel, Viertel oder eine größere Drehung unterbunden. Die Führungsmittel und/oder Führungsvorrichtung ermöglichen eine gleitende Führung. Sie stellen eine Lagerung, insbesondere Gleitlagerung, bevorzugt Axial bzw. Lineargleitlagerung dar.

Es wird vorgeschlagen, dass das oder die Führungsmittel Bestandteil einer Führungsvorrichtung ist/sind. Eine Führungsvorrichtung kann insbesondere weitere Aufgaben, beispielweise die Drehführung eines Drehkörpers übernehmen. Sie kann zudem radialelastische Führungsmittel aufweisen. Sie kann aus einem anderen Werkstoff als die Abstützeinheit, der Schiebesitz und/oder das Chassis gebildet sein. Die Führungsvorrichtung ist vorteilhaft als separates Bauteil zwischen Chassis und Abstützeinheit angeordnet. Die Führungsvorrichtung kann der Dämpfung und/oder Geräuschemissionsreduzierung dienen.

Es wird vorgeschlagen, dass das oder die drehhemmenden Führungsmittel als Führungsprofil, insbesondere Führungsschiene, insbesondere Gleitführungsschiene ausgebildet ist/sind. Diese ist/sind vorteilhaft parallel zur Höhenverstellachse angeordnet. Sie bilden vorteilhaft eine Führungsfläche und/oder Gleitfläche aus, die mit korrespondierenden Führungsprofilen an der Abstützeinheit bzw. dem Schiebesitz interagieren. Vorteilhaft bildet das Führungsprofil an der Abstützeinheit bzw. dem Schiebesitz eine keilförmige Nut mit dessen äußerer Mantelfläche aus. Das Führungsprofil der Führungsvorrichtung ist vorteilhaft zwischen dem Führungsprofil der Abstützeinheit bzw. dem Schiebesitz aufgenommen, insbesondere durch dieses einspannbar ausgebildet. Insbesondere eine Verlagerung der Abstützeinheit bzw. des Schiebesitzes in Richtung der Führungsvorrichtung bewirkt eine Kontaktspannung und erhöht die Kraftübertragungsmöglichkeit insbesondere durch Reibschluss. Insbesondere dadurch kann eine spielfreie Kontaktierung der korrespondierenden Führungsprofile am Schiebesitz und der Führungsvorrichtung ermöglicht werden.

Es wird vorgeschlagen, dass das Führungsmittel laschenartig ausgebildet und/oder an einer Führungsvorrichtung laschenartig angebunden ist, insbesondere einstückig mit ihr ausgebildet ist. Die laschenartige Anbindung ist durch eine Anbindung an einer von vier Seiten bereitgestellt, insbesondere so dass sie schwenkbar um den Anbindungsbereich ausgebildet ist. An den drei weiteren Seiten ist die Lasche vom restlichen Führungselement getrennt ausgebildet.

Es wird vorgeschlagen, dass am Motorgehäuse, Motoraufnahmegehäuse oder Schiebesitz zumindest ein bevorzugt mehrere korrespondierendes in Umfangsrichtung und/oder in Radialrichtung relativ zur Höhenverstellachse nicht-elastisch verlagerbare Führungsmittel, insbesondere korrespondierende Führungsprofile vorgesehen sind. Diese können aus einem anderen, insbesondere festeren Werkstoff ausgebildet sein. Eine Materialstärke kann größer ausfallen. Darüber kann eine sichere Kraftübertragung auf die Führungselemente ermöglicht werden. Bei Überlastung ist mitunter sichergestellt, dass eher die Führungsvorrichtung bzw. elastisch verlagerbaren Führungsmittel Schaden nehmen, was die Reparaturkosten senken kann.

Es wird vorgeschlagen, dass die Führungsvorrichtung bzw. Führungselement der Führungsvorrichtung ein radialelastisches Formschlusselement aufweist. Dies kann als Lasche ausgebildet sein. Es ist einstückig mit dem Führungselement ausgebildet. Es ist an einer von vier Seiten angebunden, insbesondere so, dass es schwenkbar um den Anbindungsbereich ausgebildet ist. An den drei weiteren Seiten ist es durch eine Nut vom restlichen Führungselement getrennt. Dadurch kann die Abstützeinheit zusätzlich spielfrei relativ zur Führungsvorrichtung bzw. dem Führungselement positionieren und/oder zumindest radial zentrieren werden. Besonders bei höheren Belastungen dient es bzw. die Lasche als elastischen Abstützung der Abstützeinheit radial zur Höhenverstellachse.

Es wird vorgeschlagen, dass die Führungsvorrichtung zur insbesondere elastisch axialhemmenden Drehführung eines Drehkörpers der Höhenverstellvorrichtung vorgesehen ist, insbesondere elastisch axialhemmenden Drehführung eines den Schiebesitz treibenden Drehkörpers. Der Schiebesitz ist bei einer Drehung des Drehkörpers zur Höhenverstellung linear verschiebbar. Der Drehkörper und der Schiebesitz weisen dazu vorteilhaft korrespondierende Gewinde auf. Der Schiebesitz bzw. die Abstützvorrichtung könnte prinzipiell aber auch anders verlagerbar ausgebildet sein, beispielsweise durch eine Vorrichtung gemäß der EP3167703 Fig. 5, insb. Bezugszeichen 30, 68, 70, 28, 64, 66.

Durch die elastisch axialhemmenden Drehführung können Vibrationen des Drehkörpers im Übertragungsweg auf das Chassis gedämpft werden. Dies dient einer Geräuschemissionsreduzierung. Die Drehführung ist vorteilhaft gleitgelagert aufgenommen. Die elastische Aufnahme wird vorteilhaft durch axialelastisch verlagerbare Führungsmittel bzw. elastische Axialformschlusselemente, insbesondere Laschen oder dergleichen bereitgestellt. Damit der Drehkörper bzw. ein Ringabschnitt des Drehkörpers in der Drehführung bzw. im Drehsitz drehen kann weist diese ein gewisses Spiel auf. Die axialelastischen Führungsmittel verengen den axialen Abstand der Drehführungselemente zumindest in dem Bereich ihrer Anordnung. Somit kann ein Spiel partiell reduziert werden. Eine Axialverlagerung ist elastisch möglich, bis der Drehkörper an die unverlagerbare Drehführung bzw. Drehführungselemente bzw. den unverlagerbaren Drehsitz anstößt. Insofern kann eine elastisch axialhemmende Drehführung bereitgestellt werden. Sie ist in einem begrenzten Verlagerungsbereich durch die axialelastischen Führungsmittel elastisch und in einem darüberhinausgehenden Bereich unelastisch bzw. axial unverlagerbar ausgebildet. Der Drehkörper ist vorteilhaft mit dem Ringabschnitt verbunden, insbesondere einstückig mit ihm ausgebildet.

### Zeichnung

Weitere Vorteile ergeben sich aus der folgenden Zeichnungsbeschreibung. In der Zeichnung ist ein Ausführungsbeispiel zumindest der Erfindung in mehreren Figuren dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Arbeitsgerät in Form eines autonomen Arbeitsgeräts, insbesondere eines autonomen Rasenmähers,
- Fig. 2: das Arbeitsgerät in einer schematischen Schnittdarstellung,
- Fig. 3: einen Teilausschnitt des Arbeitsgeräts in einer schematischen Explosionsdarstellung ohne Chassis oder Gehäuse,
- Fig. 4: ein Schnitt durch den Teilausschnitt in einer Schnittebene C-C gemäß Fig. 9,

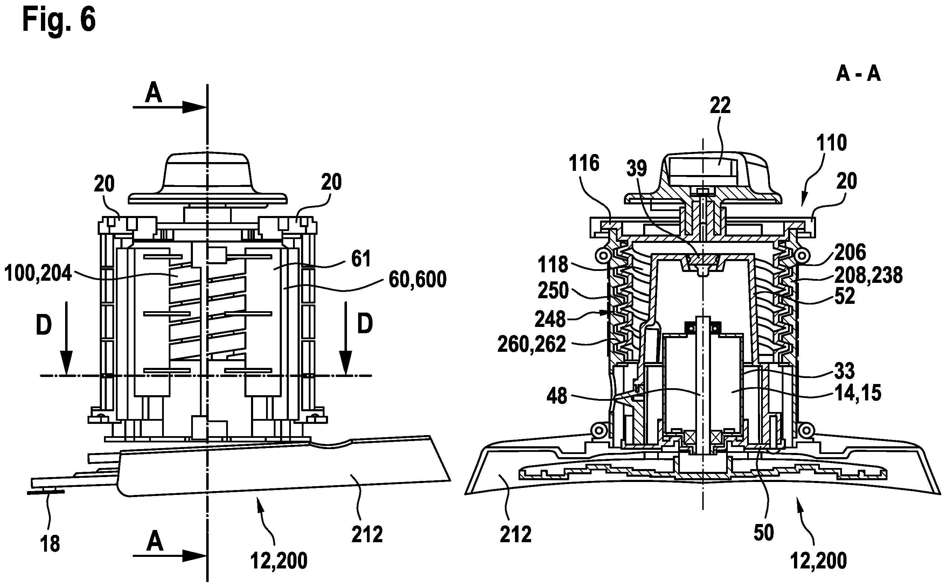

- Fig. 5: ein Schnitt durch den Teilausschnitt in einer Schnittebene D-D gemäß Fig. 6,
- Fig. 6: eine Seitenansicht auf den Teilausschnitt und eine Schnittdarstellung durch die Schnittebene A-A,
- Fig. 7: eine Frontansicht auf den Teilausschnitt und eine Schnittdarstellung durch die Schnittebene B-B in einer ersten Konfiguration bzw. Arbeitshöheneinstellung,
- Fig. 8: eine Frontansicht auf den Teilausschnitt und eine Schnittdarstellung durch die Schnittebene B-B in einer zweiten Konfiguration bzw. Arbeitshöheneinstellung,
- Fig. 9: eine Draufsicht auf den Teilausschnitt und einen Verweis auf die Schnittebene C-C nach Fig. 4,
- Fig. 10: eine perspektivische Einzeldarstellung einer Abstützeinheit bzw. eines Schiebesitzes,
- Fig. 11: eine Front- und Rückansicht der Abstützeinheit bzw. des Schiebesitzes nach Fig. 10,
- Fig. 12: eine perspektivische Einzeldarstellung einer Führungsvorrichtung.

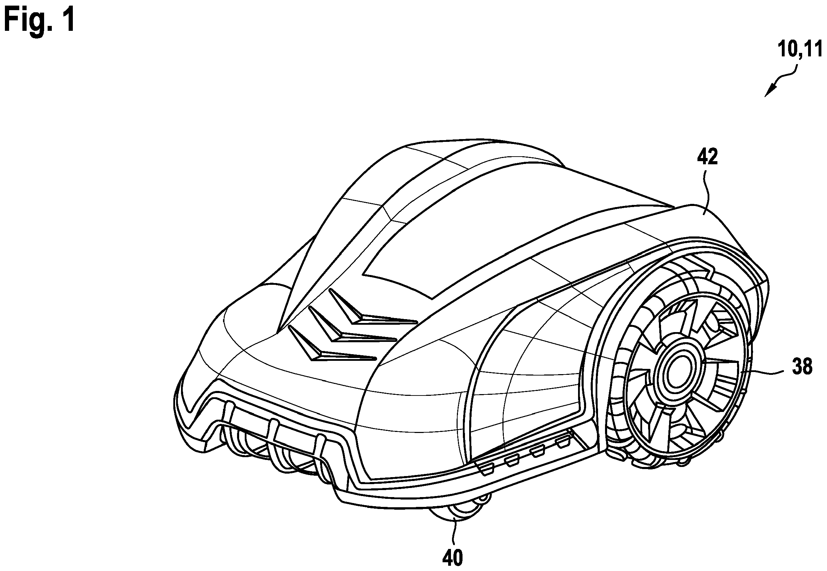

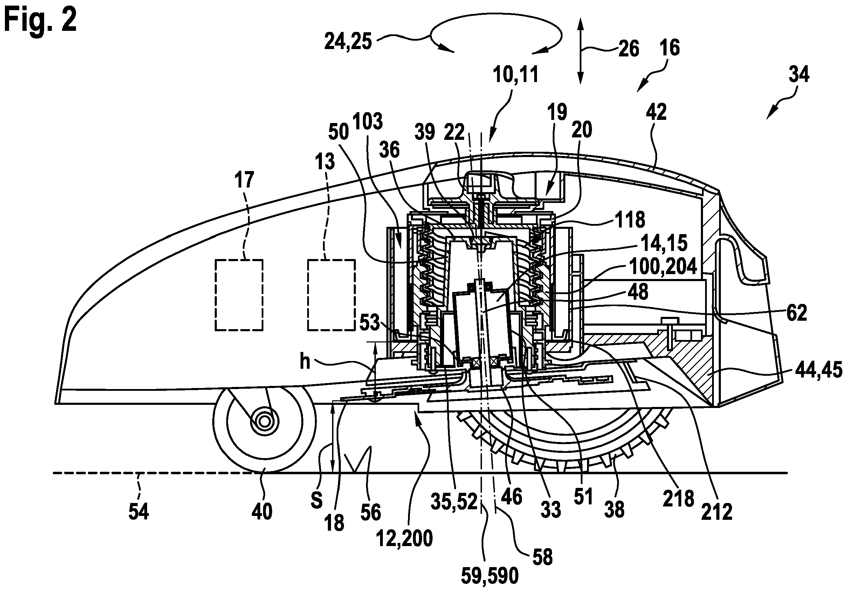

Figur 1 zeigt ein Arbeitsgerät 10 in einer perspektivischen schematischen Darstellung. Es ist als autonomes Arbeitsgerät 10 ausgebildet. Es ist als Rasenmäher 11 ausgebildet. Es ist als autonomer Rasenmäher 11 ausgebildet. Das Arbeitsgerät 10 ist zu einer Bearbeitung einer Rasenfläche vorgesehen. Das Arbeitsgerät 10 ist dazu vorgesehen, eine Rasenfläche zu mähen. Alternativ könnte das oder ein alternativ aufgebautes Arbeitsgerät beispielsweise zum Vertikutieren, Trimmen oder dergleichen vorgesehen oder als solches ausgebildet sein. Es könnte auch als Schieberasenmäher ausgebildet sein, der zumindest manuell über eine Arbeitsfläche geführt, insbesondere zumindest manuell über eine Arbeitsfläche schiebbar ist. Es könnte aber auch ein flugfähiges oder lauffähiges Arbeitsgerät (hier nicht dargestellt) mit an einem Chassis 45 fixierten Rotoren, Gelenkarmen, anderen Fortbewegungsmitteln oder dergleichen ausgebildet sein. Es könnte prinzipiell auch als ein Reinigungsgerät mit einem als Reinigungswerkzeug ausgebildeten Werkzeug, das an der Werkzeugaufnahme insbesondere mit seiner Antriebseinheit höhenverstellbar relativ zum Chassis 45 aufgenommen ist, ausgebildet sein. Gemäß dem Ausführungsbeispiel der Fig. 1 ist das Arbeitsgerät 10 zu einer autonomen Fortbewegung vorgesehen. Das Arbeitsgerät 10 weist zu einer autonomen Fortbewegung zwei separat angetriebene Hinterräder 38 sowie zwei frei drehbare Vorderräder 40 auf, wobei in Fig. 1 und in der Schnittdarstellung gemäß Fig. 2 nur jeweils ein Hinter- und ein Vorderrad zu sehen ist. Der prinzipielle Aufbau eines autonomen Rasenmähers sollte dem Fachmann hinreichend bekannt sein, weshalb auf Details zum Radantrieb, der Steuer- oder Regelung, den Navigations- und/oder Kommunikationsmittel hier nicht näher eingegangen wird. Prinzipiell kann das Arbeitsgerät auch andere Fortbewegungsmittel aufweisen beispielsweise die zuvor erwähnten Gelenkarme die an einem Chassis befestigt sind, beispielsweise um eine einem Zwei- oder Vierfüßler nachempfundene Fortbewegungsart zu ermöglichen. Alternativ könnte das Arbeitsgerät auch schwebend, beispielsweise als Drohne ausgebildet sein. Die Hinterräder 38 werden einzeln von nicht weiter sichtbaren Antriebseinheiten angetrieben. Sie sind einzeln ansteuerbar. Dadurch ist das Arbeitsgerät manövrierbar. Die Vorderräder 40 sind zu einer Veränderung einer Ausrichtung horizontal frei verdrehbar. Die Fortbewegung des autonomen Arbeitsgeräts 10 kann von einer Steuer- oder Regeleinheit 13 gesteuert oder geregelt.

Fig. 2 zeigt einen schematischen Schnitt längs durch das Arbeitsgerät 10 bzw. den autonomen Rasenmäher 11 nach Fig. 1 oder ein Schnitt durch ein vergleichbares Arbeitsgerät. Das autonome Arbeitsgerät 10 weist ein Gehäuse 34 auf. Das Gehäuse 34 ist insbesondere von einem Kunststoffgehäuse gebildet, kann aber auch zumindest teilweise aus einem anderen Material gebildet sein. Das Gehäuse 34 weist eine obere Gehäuseschale 42 und eine untere Gehäuseschale 44 auf. Die obere Gehäuseschale 42 ist mit der unteren Gehäuseschale 44 verbunden. Die untere Gehäuseschale 44 bildet das Chassis 45 des Arbeitsgeräts 10. Am Chassis 45 sind hier die Hinter- und Vorderräder 38, 40 aufgenommen. Ferner weist das Arbeitsgerät 10 eine Werkzeugaufnahme 12 auf. Die Werkzeugaufnahme 12 dient zu einer Aufnahme eines Werkzeugs 18. Das Werkzeug 18 wird an der Werkzeugaufnahme 12 befestigt. Die Werkzeugaufnahme 12 weist eine antreibbare Drehscheibe 46 auf. Das Werkzeug 18 wird an der Drehscheibe 46 der Werkzeugaufnahme 12 befestigt. Das Werkzeug 18 bilden mehrere Messer. Hier sind drei Messer vorgesehen (wovon nur zwei sichtbar sind), die in regelmäßigen Abständen bzw. Winkeln (alle 120°) an der Werkzeugaufnahme 12 drehbar befestigt sind. Das Werkzeug 18 bildet ein Schneidwerkzeug aus. Die Werkzeugaufnahme 12 und das Werkzeug 18 bilden zumindest Teile einer Schneidvorrichtung 200. Selbstverständlich ist auch eine andere Anzahl an Messern oder eine andere Konfiguration der Schneidvorrichtung 200 vorstellbar, beispielsweise als Messerbalken oder dergleichen. Des Weiteren weist das Arbeitsgerät 10 eine Antriebseinheit 14 auf. Die Antriebseinheit 14 ist durch einen Motor 15 gebildet oder umfasst diesen zumindest. Der Motor 15 ist als Elektromotor ausgebildet. Die Antriebseinheit 14 ist zu einem Antrieb der Werkzeugaufnahme 12 bzw. der Schneidvorrichtung 200 vorgesehen. Die Antriebseinheit 14 ist zu einem Antrieb des Werkzeugs 18 vorgesehen. Die Antriebseinheit 14 weist eine Antriebswelle 48 auf, welche mit der Drehscheibe 46 der Werkzeugaufnahme 12 drehfest verbunden ist. Prinzipiell könnte zwischen der Drehscheibe 46 und der Antriebseinheit 14 auch eine Übersetzung vorgesehen sein, beispielsweise mittels eines Getriebes z.B. in Form eines Riemens mit Riemenscheiben unterschiedlicher Durchmesser oder dergleichen. Eine Riemenscheibe könnte an der Antriebswelle 48, die andere Antriebsscheibe an einer hier nicht dargestellten separaten Antriebswelle für eine Werkzeugaufnahme und/oder ein Werkzeug vorgesehen sein. Über die Antriebswelle 48 und die Drehscheibe 46 der Werkzeugaufnahme 12 wird das Werkzeug 18 angetrieben. Eine Achse 58 des Motor 15, bzw. der Antriebseinheit 14 bzw. der Antriebswelle 48 ist gegenüber einer Vertikalen - hier der Achse 59 geneigt. Die Achse 59 ist im Wesentlichen senkrecht zu einer Standebene 56 des autonomen Arbeitsgeräts 10 ausgebildet. Die Achse 59 bildet auch die Höhenverstellachse 590 der Höhenverstellvorrichtung bzw. der Höhenverstelleinheit 16. Die Achse 58 der Antriebseinheit 14 ist gegenüber einer Normalen senkrecht zu einer Standebene 56 bzw. gegenüber der Achse 59 des autonomen Arbeitsgeräts 10 typischerweise um 0-10°, bevorzugt um 3° geneigt. Die Achse 58 der Antriebseinheit 14 bildet eine Drehachse der Werkzeugaufnahme 12. Durch die Neigung der Achse 58 kann ein Widerstand auf das Werkzeug 18, während es über das Gras geleitet in bekannter Weise verringert werden. Es kann während eines Betriebs, insbesondere während einer Vorwärtsbewegung des Arbeitsgeräts 10 vorteilhaft primär mit einer Vorderkante des Werkzeugs 18 geschnitten werden.

Ein Motoraufnahmegehäuse 36 ist zu einer Aufnahme der Antriebseinheit 14 bzw. des Motors 15 vorgesehen. Prinzipiell kann das Motoraufnahmegehäuse 36 lediglich als Flanschaufnahme ausgebildet sein und nicht weiter abgedichtet sein. Der Motor 15 wäre dann einfache mittels dessen Motorgehäuse 33 an der Flanschplatte fixiert. Hier wird die Antriebseinheit 14 bzw. der Motor 15 aber vorteilhaft von dem Motoraufnahmegehäuse 36 zumindest teilweise, insbesondere vollständig umschlossen, insbesondere zumindest teils abdichtend umschlossen. Das Motoraufnahmegehäuse 36 kann einen insbesondere topfgehäuseförmigen Grundkörper 50 und einen Deckel 52 aufweisen. Der Deckel 52 ist vorteilhaft näher an der Standebene 56 angeordnet als der Grundkörper 50. Der Deckel 52 ist benachbart zur Werkzeugaufnahme 12 und/oder zwischen dem Motor 15 und der Werkzeugaufnahme 12 angeordnet. Der Deckel 52 ist zwischen der Schneidvorrichtung 200 und dem Motorgehäuse 33 des Motors 15 angeordnet. Der Deckel 52 ist benachbart zur Standebene 56, der Grundkörper 50 abgewandt dazu bzw. oberhalb davon angeordnet. Der Deckel 52 bildet einen Aufnahmebereich zur Aufnahme der Antriebseinheit 14. Er dient sozusagen als Motorflansch 35 für den Motor 15. Das Motoraufnahmegehäuse 36 wird von dem Deckel 52 zu einer Seite hin, insbesondere zur Standebene 56 hin verschlossen. Der Deckel 52 ist mit dem Grundkörper 50 verbunden - hier verschraubt. Zudem ist ein Dichtungselement 51 bzw. Dichtmittel zwischen dem Deckel 52 und dem Grundkörper 50 vorgesehen, insbesondere eine Kompressionsdichtung oder ein anderes Dichtmittel oder dergleichen. Die Antriebseinheit 14 ist fest mit dem Deckel 52 bzw. dem Motorflansch verbunden. Eine direkte Wärmeleitung vom Motorgehäuse 33 auf den Deckel 52 bzw. Motorflansch 35 ist vorteilhaft ermöglicht. Zudem ist ein Dichtungselement 53 bzw. Dichtmittel zwischen dem Deckel 52 und der Antriebseinheit 14 bzw. dem Motor 15 vorgesehen. Durch das bzw. die Dichtungselemente 51, 53 kann ein Eindringen von Feuchtigkeit in das Motoraufnahmegehäuse 36 vermieden werden, was zumindest der Korrosionsvermeidung, insbesondere der Korrosionsvermeidung von Motorbauteilen dient. In einem dem Deckel 52 abgewandten Grund des Grundkörpers 50 (hier also oben), weist der Grundkörper 50 eine Aufnahme bzw. eine Öffnung für einen Entlüfter 39 bzw. eine Entlüftungsöffnung auf. Der Entlüfter 39 kann insbesondere zur luftdurchlässigen aber zumindest wasserabhaltenden Abdichtung des Motoraufnahmegehäuses 36 dienen. Das Motoraufnahmegehäuse 36 kann zur Aufnahme eines Kühlsystems dienen und/oder Teile davon ausbilden. Beispielsweise kann durch die Materialwahl des Deckels 52 und Grundkörpers 50 wie weiter unten erläutert ein Wärmestrom gelenkt werden und ein Kühlsystem bereitgestellt werden. Das Motoraufnahmegehäuse 36 weist insbesondere in einem oberen Bereich des Grundkörpers 50 eine teils stumpfkegelige Grundform auf. Es ist von einem zylindrischen Drehkörper 118 umgeben. Im Deckel 52 ist eine Ausnehmung vorgesehen, über welche die Antriebswelle 48 aus dem Deckel 52, bzw. dem Motorflansch 35, bzw. dem Motoraufnahmegehäuse 36 geführt ist. In einem Bereich der Ausnehmung des Deckels 52 kann ein Lager 268 zur Lagerung der Antriebswelle 48 angeordnet sein. Zudem kann eine Radialdichtung 270 vorgesehen sein, insbesondere um ein Eindringen von Feuchtigkeit von außerhalb des Motoraufnahmegehäuses 36 zumindest durch den Bereich der Ausnehmung zumindest zu erschweren. Auf einer dem Grundkörper 50 abgewandten Seite des Deckels 52 bzw. des Motoraufnahmegehäuses 36 ist die Werkzeugaufnahme 12 angeordnet und mit der Antriebswelle 48 verbunden. Der Deckel 52 bzw. Motorflansch 35 kann aus einem insbesondere wärmeleittechnisch anderen Material als der Grundkörper 50 bzw. der Gehäusetopf des Motoraufnahmegehäuses 36 gebildet sein. Vorteilhaft ist der Motorflansch 35 aus einem Material mit höherer Wärmeleitfähigkeit als das Material des Grundkörpers 50 gebildet, beispielsweise einem erhöht wärmeleitfähigen Kunststoff, Verbundwerkstoff, Metall, insbesondere aluminiumhaltigen Metall und/oder dergleichen. Wärme im Motoraufnahmegehäuse 36 und/oder dem Arbeitsgerät 10, insbesondere verursacht durch den Motor 15, kann somit gelenkt werden. Ein Teil des Motoraufnahmegehäuse 36, insbesondere der Deckel 52 bzw. Motorflansch 35 kann somit zumindest als ein Teil eines Kühlsystems bilden. Vorteilhaft führt der Deckel 52 Wärme in Richtung der Standebene 56 bzw. in Richtung der Werkzeugaufnahme 12 ab, insbesondere in Richtung einer durch einen Betrieb des Werkzeugs 18 bzw. der Werkzeugaufnahme 12 verursachten Luftströmung. Dieser dient sozusagen als eine Art Kühlluftströmung für den Motor. Der Deckel 52 steht in unmittelbaren Kontakt mit Luft bzw. dem Luftstrom an einer Unterseite des Arbeitsgeräts 10. Der Grundkörper 50 bzw. der Gehäusetopf ist vorteilhaft aus einem zumindest wärmeleittechnisch isolierenden Material, beispielsweise Kunststoff gebildet. Dadurch, dass das Motoraufnahmegehäuse 36 bzw. der Grundkörper 50 und Deckel 52 unterschiedliche Materialen aufweist(en), kann einerseits eine Isolationswirkung, andererseits eine Wärmeabgabewirkung bereitgestellt werden. Der Deckel 52 bzw. Motorflansch, der insbesondere in Kontakt mit der durch die Werkzeugaufnahme 12 und/oder das Werkzeug 18 verursachten Luftströmung steht, führt Wärme ab. Der Grundkörper 50 bzw. das restliche Motoraufnahmegehäuse 36, das im Inneren des Gehäuses 34 angeordnet ist, ist und/oder wirkt zumindest isolierend. Vorteilhaft kann ausschließlich der Deckel 52 bzw. Motorflansch 35 aus dem verbessert wärmeleitfähigen Material. Insbesondere kann es aus einem stabileren Material gebildet sein als der Grundkörper 50, insbesondere um den Motor 15 und/oder einen Fangschutz 212 oder dergleichen sicher, insbesondere drehfest aufnehmen zu können. Dadurch können Kosten gespart werden, da nicht das gesamte Motoraufnahmegehäuse 36 bzw. der Grundkörper 50 aus wärmeleitfähigem und/oder stabilerem Material gestaltet ist. Eine gezielte Wärmeabfuhr ist ermöglicht, insbesondere in einen Bereich, wo insbesondere durch das Werkzeug 18, bzw. die Werkzeugaufnahme 12 mit optimaler Wärmeabfuhr gerechnet werden kann (hohe Luftzirkulation, abgeschattete Seite des Arbeitsgeräts, Bodennah und/oder im Bereich des feucht- und/oder kühlen Grases etc.). Zudem kann eine Wärmeabgabe durch das restliche Motoraufnahmegehäuse 36 bzw. den Grundkörper 50 zumindest verringert werden. Dadurch wird zumindest wenig Wärme zumindest vom Motor 15 in das Innere des Gehäuses 34, insbesondere zwischen die obere und die untere Gehäuseschale 42, 44 abgegeben. Gewissermaßen wird durch den Grundkörper 50 des Motoraufnahmegehäuses 36 eine Isolierung erreicht. Durch den Deckel 52 bzw. Motorflansch 35 wird eine Wärmebrücke bereitgestellt. Insbesondere kann dadurch eine Überhitzung weiterer elektrischer oder elektronischer Komponenten beispielsweise der Steuer- und Regeleinheit 13 und/oder eines Akkumulators 17 zur Energieversorgung des Rasenmähers 11 oder dergleichen, vermieden werden. Eine effektive Wärmeabfuhr aus dem Motoraufnahmegehäuse 36 insbesondere von durch die Antriebseinheit 14 erzeugter Wärme wird ermöglicht. Ein hoher Wirkungsgrad des Motors 15 durch eine effektive Kühlung kann erhalten werden.

Ferner weist das autonome Arbeitsgerät 10 eine Höhenverstelleinheit bzw. Höhenverstellvorrichtung 16 auf. Die Höhenverstelleinheit 16 ist zumindest zu einer Einstellung einer Arbeitshöhe h oder Schnitthöhe s der Schneidvorrichtung 200 bzw. des von der Werkzeugaufnahme 12 aufgenommen Werkzeugs 18 vorgesehen. Sie ist ferner zur Höhenverstellung der Antriebseinheit 14 bzw. Motors 15, insbesondere des die Antriebseinheit 14 aufnehmenden Motoraufnahmegehäuses 36 vorgesehen. Sie umfasst einen Drehkörper 118 und einen Schiebesitz 204, die gewindemäßig miteinander verbunden sind (siehe Beschreibung später). Der Drehkörper 118 und der Schiebesitz 204 sind von einer Führungsvorrichtung 19 geführt, insbesondere umfassend den Drehkörper 118 axialhemmende und den Schiebesitz 204 drehhemmende Führungselemente 19. Der Schiebesitz 204 bildet eine Abstützeinheit 100 bzw. Abstützvorrichtung zum Abstützen der Antriebseinheit 14 bzw. des Motoraufnahmegehäuses 36 aus. Er ist über Trag- und Abstützelemente 102 mit dem Motoraufnahmegehäuse 36 verbunden. Die Abstützeinheit 100 könnte prinzipiell auch direkt mit dem Motor 15 bzw. dem Motoraufnahmegehäuse 36 verbunden sein. Die Höhenverstellvorrichtung 16 könnte bzgl. dem Höhenverstellmechanismus auch anders (insb. ohne Drehkörper) konfiguriert sein, beispielsweise gemäß den Figuren, insbesondere Fig. 2-5 der EP3167703. Vorteilhaft wären jedoch zusätzlich eine Abstützeinheit und/oder Führungseinheit und ein/mehrere Trag- und Abstützelemente vorzusehen, um die Antriebseinheit bzw. das Motoraufnahmegehäuse und/oder die Werkzeugaufnahme von der Abstützeinheit bzw. dem Chassis zu entkoppeln.

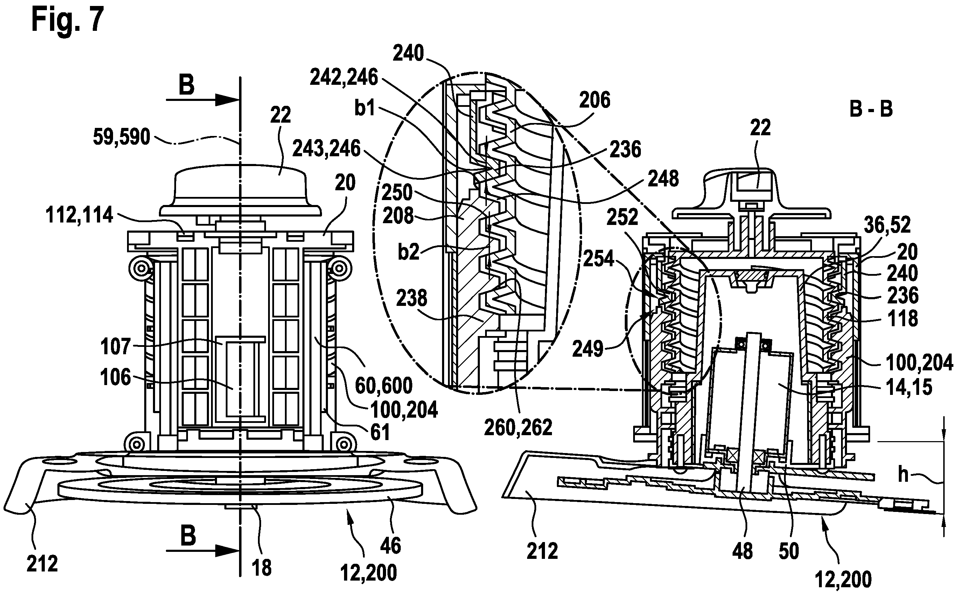

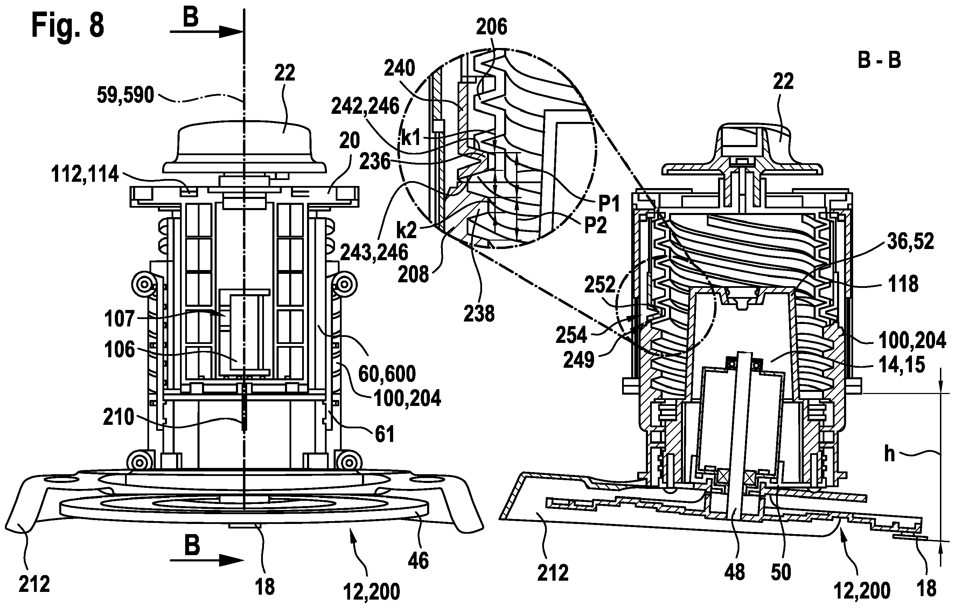

Die Höhenverstellvorrichtung 16 ist an einer Aufnahme 103 des Chassis 45 aufgenommen (siehe tiefer). An dem Motoraufnahmegehäuse 36 ist eine Schutzvorrichtung fixiert, insbesondere ein Fangschutz 212 zum Auffangen sich lösender Teile der und/oder an der Werkzeugaufnahme fixierter Bauteile und/oder von Schnittgut oder dergleichen. Diese/dieser ist zusammen mit dem Motoraufnahmegehäuse 36 höhenverstellbar ausgebildet. Eine Arbeitshöhe h des Werkzeugs 18 ist als Arbeitshöhe relativ zum Chassis 45 oder einem fest damit verbundenen Bauteil der Höhenverstellvorrichtung 16 definiert. Eine Schnitthöhe s des Arbeitsgeräts 10 bzw. des Werkzeugs 18 ist relativ zur Standebene 56 definiert. Über die Höhenverstelleinheit 16 kann ein Bediener eine von ihm gewünschte Arbeitshöhe h einstellen. Alternativ könnte die Arbeitshöhe h auch automatisch, beispielsweise von einer motorischen Vorrichtung verstellt werden. Die Höhenverstelleinheit 16 ist zu einer werkzeuglosen Einstellung der Arbeitshöhe h bzw. Schnitthöhe des Werkzeugs 18 relativ zum Chassis 45 bzw. relativ zum Untergrund bzw. zur Standebene 56 vorgesehen. Die Schnitthöhe s ist dabei vorzugsweise durch den Abstand eine parallel zur Standebene 56 des autonomen Arbeitsgeräts 10 verlaufenden Ebene definiert, in welcher ein tiefster Punkt des Werkzeugs 18 liegt. Die Arbeitshöhe h kann stufenweise verstellt werden, könnte prinzipiell aber auch stufenlos verstellt werden. Die Fig. 7 und 8 zeigen unterschiedliche Arbeits- bzw. Schnitthöhen h, s des Arbeitsgeräts 10 bzw. Rasenmähers 11, bzw. unterschiedliche Zustände der Höhenverstelleinheit 16. Die Schnitthöhe s in Fig. 7 ist beispielhaft maximal eingestellt, sprich der Abstand von der Standebene 56 zum Werkzeug 18 ist maximal. In Figur 8 ist die Schnitthöhe s beispielhaft minimal eingestellt, sprich der Abstand von der Standebene 56 zum Werkzeug 18 ist minimal. Für die Arbeitshöhe h bzw. die Abstände vom Chassis 45 gilt das umgekehrte.

Die Höhenverstelleinheit 16 umfasst mehrere Bauteile. Im gezeigten Ausführungsbeispiel umfasst die Höhenverstelleinheit 16 zumindest ein Betätigungselement 22, einen Drehkörper 118 und einen Schiebesitz 204. Eine Führungsvorrichtung 19 führte den Drehkörper und den Schiebesitz 204 relativ zum Chassis 45. Das Betätigungselement 22 ist dazu vorgesehen in eine Betätigungsrichtung 24 bewegt zu werden. Das Betätigungselement 22 ist dazu vorgesehen um die Höhenverstellachse 590 gedreht zu werden. Das Betätigungselement 22 ist mit dem Drehkörper 118 verbunden. Das Betätigungselement 22 ist über eine Steckverzahnung 202 mit dem Drehkörper 118 drehstarr verbunden. Es könnte auch eine Übersetzung zwischen dem Drehkörper 118 und dem Betätigungselement 22 vorgesehen sein, insbesondere wobei ein alternatives Betätigungselement exzentrisch zur Höhenverstellachse 590 angeordnet sein könnte. Der Drehkörper 118 ist als hohlzylindrischer Drehkörper 118 ausgebildet. Der Drehkörper 118 ist von einem Schiebesitz 204 zumindest teilweise radial umgeben. Der Drehkörper 118 und der Schiebesitz 204 weisen korrespondierende Gewinde 206, 208 auf, so dass durch eine Drehung des Drehkörpers 118 eine Linearverschiebung des Schiebesitzes 204 erfolgt. Der Drehkörper 118 weist ein Außengewinde, der Schiebesitz 204 ein korrespondierendes Innengewinde auf. Das Motoraufnahmegehäuses 36 ist innerhalb des hohlzylindrischen Drehkörpers 118 verlagerbar. Der Schiebesitz 204 ist als Abstützeinheit 100 für das Motoraufnahmegehäuse 36 ausgebildet. Der Schiebesitz 204 ist axial- bzw. linearverschieblich entlang der Achse 59 ausgebildet. Er ist durch die Führungsvorrichtung 19 drehgehemmt im Chassis 45 aufgenommen, insbesondere drehgehemmt um die Achse 59. Die Führungsvorrichtung 19 ist fest mit dem Chassis 45 verbunden. Die Führungsvorrichtung 19 ist an der Aufnahme 103 bzw. einer Führungsaufnahmekammer 62 des Chassis 45 fixiert.

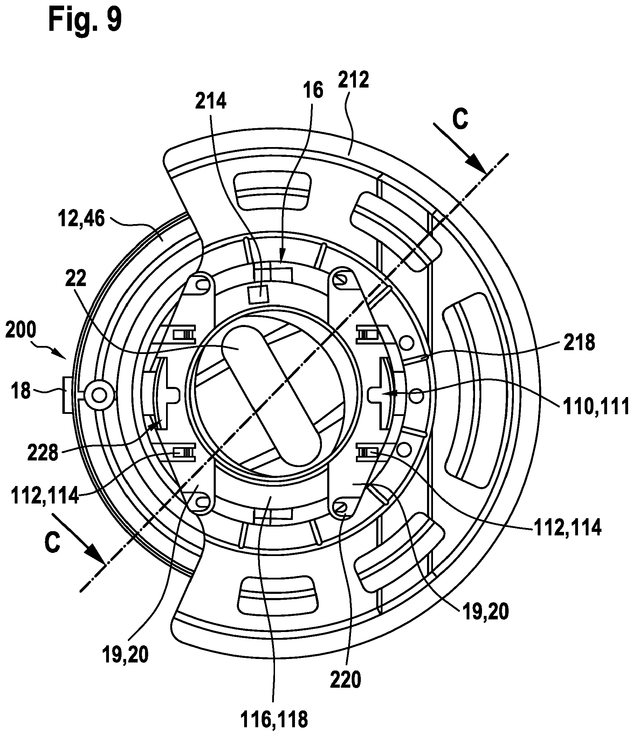

Der Drehkörper 118 und der Schiebesitz 204 bzw. die Abstützeinheit 100 weisen korrespondierende Gewinde 206, 208 bzw. Gewindeabschnitte 122, 124 auf. Es sind mehrgängige Gewinde 206, 208 vorgesehen. Im vorliegenden Ausführungsbeispiel weist das Gewinde 206, 208 vier Gänge auf. Damit kann vorteilhaft ein Hub des Schiebesitzes 204 pro Drehung gegenüber einem eingängigen Gewinde vervierfacht werden. Insbesondere kann mittels einer Umdrehung des Betätigungselements 22 bzw. des Drehkörpers 118 die Arbeitshöhe h zwischen einem Maximalwert (vgl. Fig. 8) und einem Minimalwert (vgl. Fig. 7) verstellt werden. Folglich kann mit einer verhältnismäßig geringen Drehbetätigung des Betätigungselements 22, bzw. einer Drehung des Drehkörpers 118, ein verhältnismäßig großer Hub der Abstützeinheit 100 bzw. des Schiebesitzes 204 erzielt werden. Mit einer Drehung des Drehkörpers 118 um weniger als 360° kann vorteilhaft die Arbeitshöhe h zwischen dem Maximalwert und dem Minimalwert verstellt werden. Im vorliegenden Fall entspricht dies einer Schnitthöhe s zwischen 20 und 60 mm. Die Schnitthöhe s kann durch ein Anzeigemittel 214 (vgl. Fig. 9) an einen Nutzer indiziert werden. Im Drehkörper 118 bzw. einem Ringabschnitt 116 des Drehkörpers 118 sind dazu entsprechende Bezifferungen angebrachten, die durch ein hier nicht dargestelltes Sichtfenster ausgelesen werden können. Die Gewinde 206, 208 bzw. Gewindeabschnitte 122, 124 sind trapezgewindeartig ausgebildet. Die Gewinde 206, 208 bzw. die Gewindeabschnitte 122, 124 sind zumindest teilweise selbsthemmend ausgebildet. Ein unbeabsichtigtes Absinken der Abstützeinheit 100 innerhalb des Chassis 45 kann dadurch zumindest teilweise vermieden werden.

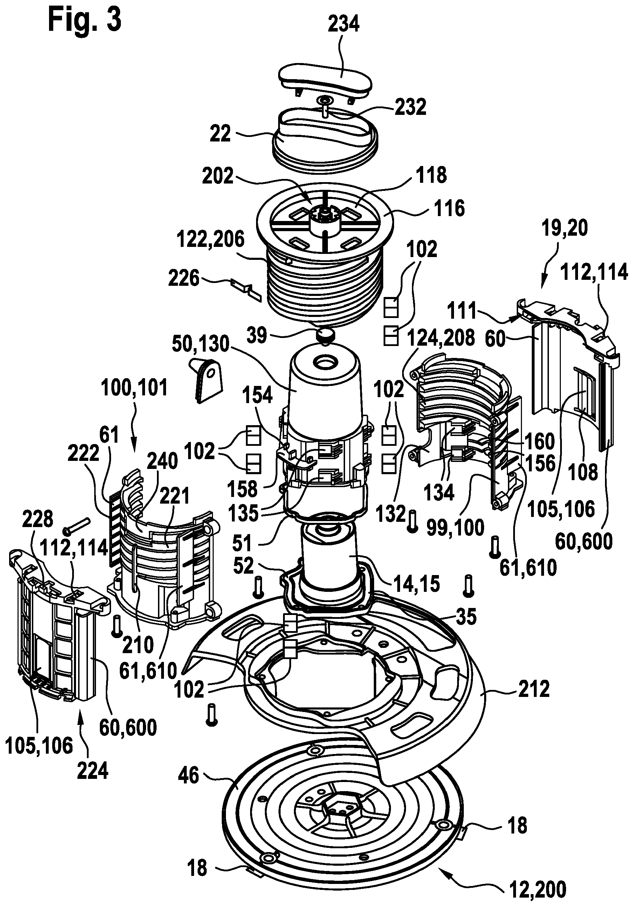

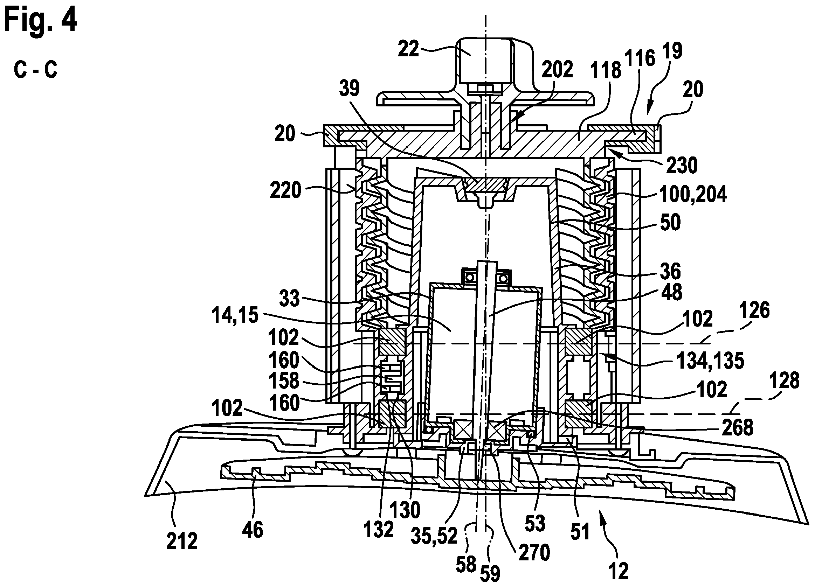

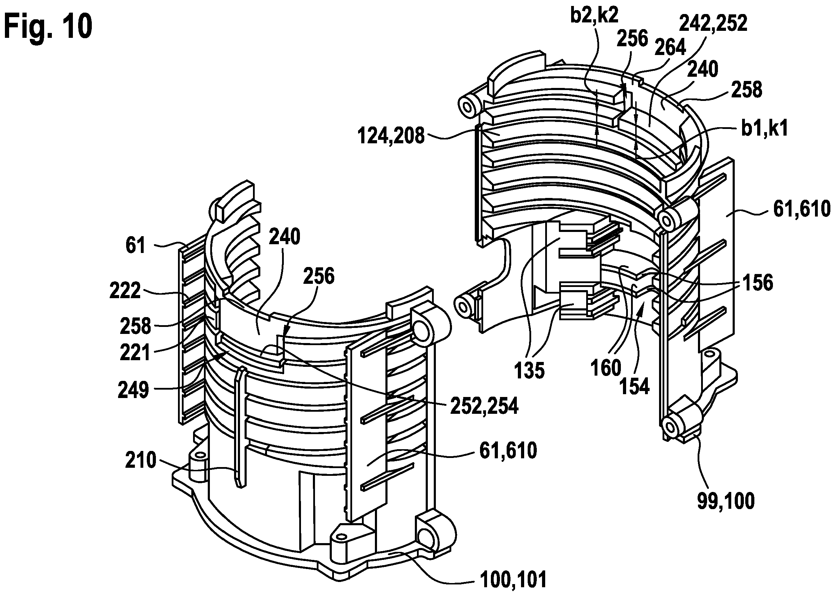

Der Drehkörper 118 ist axial in Richtung der Achse 59 axialverschiebegehemmt gehalten. Er ist durch die Führungsvorrichtung 19 bzw. die Führungselemente 20 in Umfangsrichtung drehbar und axial verschiebegehemmt aufgenommen. Die Abstützeinheit 100 ist drehgehemmt aber längsverschieblich gehalten. Sie ist durch die Führungsvorrichtung 19 bzw. die Führungselemente 20 axial verschiebbar und in Umfangsrichtung drehgehemmt geführt und/oder aufgenommen. Eine Drehung des Drehkörpers 118 bewirkt eine Linearverschiebung der Abstützeinheit 100, insbesondere ein Absenken oder Anheben der Abstützeinheit 100. Mit der Abstützeinheit 100 hebt und senkt sich auch das mit ihr verbunden Motoraufnahmegehäuse 36, bzw. die Antriebseinheit 36 und Schneidvorrichtung 200. Die Führungsvorrichtung 19 entkoppelt, insbesondere aufgrund ihrer konkreten Ausgestaltung, die Höhenverstellvorrichtung 16, insbesondere aber die Abstützeinheit und/oder die damit verbundene Antriebseinheit 14 und Schneidvorrichtung 200 zumindest teilweise, von dem Chassis 45. Die Höhenverstelleinheit 16 ist in einer Aufnahme 103 des Chassis 45 aufgenommen. Die Aufnahme 103 ist hier einstückig mit dem Chassis 45 ausgebildet. Die Aufnahme 103 bildet eine Führungsaufnahmekammer 62 aus, bzw. umgibt diese. Die Führungsaufnahmekammer 62 erstreckt sich von einer Unterseite des Arbeitsgeräts 10 in Richtung einer Oberseite des Arbeitsgeräts 10. Die Führungsaufnahmekammer 62 erstreckt sich normal bzw. senkrecht zur Standebene 56 des Arbeitsgeräts 10. Sie erstreckt sich entlang der Achse 59. Die Führungsaufnahmekammer 62 ist zumindest zur Unterseite des Chassis 45 hin geöffnet. Die Führungsaufnahmekammer 62 ist zumindest zur Aufnahme der Führungsvorrichtung 19 vorgesehen. Die Führungsvorrichtung 19 weist Führungselemente 20 auf bzw. nimmt diese auf. Es sind zwei Führungselemente 20 vorgesehen, die gegenüber voneinander angeordnet sind. Bezogen auf die Achse 59 sind sie gegenüber voneinander positioniert. Sie erstrecken sich in Richtung der Achse 59. Ferner umgeben sie die Antriebseinheit 14, das Motoraufnahmegehäuse 36, den Drehkörper 118 und/oder den Schiebesitz 204 radial, insbesondere in einem Winkelbereich von größer 45°, hier zwischen 45° und 180°. Die zwei Führungselemente 20 sind dazu vorgesehen fest an der Führungsaufnahmekammer 62 aufgenommen zu werden. Im unteren, dem Standebene 56 nahen Bereich mittels Formschlusselementen 218, im oberen Bereich mittels Verschraubungen wovon hier nur die Schraubenlöcher 220 zu sehen sind. Andere Verbindungsformen sind ebenfalls möglich. Die Führungselemente 20 weisen Führungsmittel 600 insbesondere Führungsprofile 60 auf. Diese dienen der Linearführung bzw. der insbesondere drehhemmenden axialen Führung des Schiebesitzes 204 bzw. der Abstützeinheit 100. Die Linearführung erfolgt in Richtung der Achse 59. Ferner verhindern die Führungsprofile 60 im Wesentlichen eine Rotation der Abstützeinheit 100 um die Achse 59, sie hemmen eine Drehung, ermöglichen diese aber in einem geringen Bereich, beispielsweise weniger Grad oder Zehntel-Grad. Die Führungsprofile 60 sind dazu zumindest bedingt elastisch ausgebildet. Die Führungsprofile 60 sind in Umfangsrichtung um die Achse 59 elastisch verlagerbar ausgebildet. Sie wirken auf die Abstützeinheit 100 bzw. den Schiebesitz 204 drehhemmend. Sie wirken dämpfend. Damit können Rotationskräfte der Abstützeinheit 100 gedämpft auf die Führungsvorrichtung 19 und schlussendlich auf das Chassis 45 übertragen werden. Die Führungsprofile 60 greifen in korrespondierende Führungsprofile 61 bzw. Führungsnuten der Abstützeinheit 100. Vorteilhaft sind die Führungsprofile 60, 61 zueinander derart ausgebildet, dass zwischen ihnen ein Kontakt sichergestellt ist und/oder eine zumindest geringe Vorspannung herrscht. Beispielsweise kann ein äußerer Abstand der Wandungen des Führungsprofils 60 minimal größer sein als ein innerer Abstand des korrespondierenden Führungsprofils 61. Durch eine radiale Annährung der Abstützeinheit 100 an die Führungsvorrichtung 19 kann eine Spreizung der Führungsprofile 60 erfolgen, insbesondere durch die teilweise zylindrische Mantelfläche 221 der Abstützeinheit 100 (vgl. insb. Fig. 3 und 10). Die Führungsprofile 61 des Schiebesitzes 204 bzw. der Abstützeinheit sind vorteilhaft im Wesentlichen nicht umfangselastisch, sondern zumindest im Wesentlichen umfangssteif ausgebildet. Sie weisen vorteilhaft Gleitmittel insbesondere mehrere abstehende Gleitvorsprünge 222 auf. Auch Alternativen zur Erzeugung einer Vorspannung zwischen den Führungsprofilen 60, 61 der Abstützeinheit 100 und der Führungsvorrichtung 19 sind vorstellbar. Dadurch kann ein Spiel zwischen den Bauteilen vermieden werden. Eine Geräuschentwicklung und/oder -übertragung wird durch die zumindest umfangselastische Ausbildung der Führungsmittel 600 bzw. Führungsprofile zumindest reduziert oder gedämpft. Die korrespondierenden Führungsprofile 60, 61 sind im Wesentlichen parallel zueinander ausgebildete, insbesondere als parallel zueinander ausgerichtete Körper, insb. Flächen, Bevorzugt Gleitkörper oder -flächen. Sie überlappen sich radial. Die zwei Führungsprofile 60 an einem Führungselement 20 sind zueinander im Wesentlichen parallel ausgerichtet. Sie sind am Führungselement 20 umfangselastisch und radialelastisch ausgebildet. Sie sind laschenartig am Führungselement angebunden. Sie sind vorteilhaft über einen um 90° gebogenen Winkel 224 nahe des Übergangsbereichs zum restlichen Führungselement 20 angebunden. Zumindest eines der Führungselemente 20 ist ferner dazu vorgesehen ein Rastmittel, insbesondere eine Rastfeder 226 (vgl. Fig. 3) in einer Rastmittelaufnahme 228 aufzunehmen. Das Rastmittel ist dazu vorgesehen in Rastvertiefungen 230 (in Fig. 4 nicht näher sichtbar), die an der Umfangsfläche des Drehkörpers 118, insbesondere des Drehsitzes 110 angeordnet sind, zu greifen. Dadurch kann eine segmentweise oder definierte rastende Verdrehung des Drehkörpers 118 bzw. der Höhenverstellvorrichtung 16 bereitgestellt werden. Zudem dienen Sie der Drehhemmung des Drehkörpers 118.

Zwischen dem Chassis 45 und dem Motorgehäuse 33 des Motors 15, insbesondere zwischen dem Chassis 45 und dem Motoraufnahmegehäuse 36, bevorzugt zwischen dem Chassis 45 und der Abstützeinheit 100 bzw. dem Schiebesitz 204 zum Halten und Tragen des Motors 15 und/oder des Motoraufnahmegehäuse 36, sind Führungsmittel 600 zur drehhemmenden und axialen Führung zumindest des Motoraufnahmegehäuses 36, insbesondere des Motoraufnahmegehäuse 36, bevorzugt der Abstützeinheit 100 bzw. des Schiebesitzes 204 relativ zum Chassis 45, um bzw. in Höhenverstellachsrichtung 26 vorgesehen, wobei das oder die Führungsmittel 600 in Umfangsrichtung um die Höhenverstellachse 590 elastisch verlagerbar ausgebildet sind. Die Führungsmittel 600 sind quer zur, insbesondere radial zur Höhenverstellachse 590 elastisch verlagerbar ausgebildet. Sie wirken umfangselastische, aber drehhemmend. Sie ermöglichen ein reibungsarmes axiales Gleiten parallel zur Höhenverstellachse 590. Sie wirken dämpfend bezüglich der Vibrations- und/oder Geräuschübertragung. Die Führungsmittel 600 sind Bestandteil der Führungsvorrichtung 19 bzw. der Führungselemente 20. Sie sind insbesondere als Führungsprofile 60 und/oder Gleitflächen und/oder Führungsschiene, insbesondere Gleitführungsschiene ausgebildet. Die Führungsmittel 600 sind laschenartig ausgebildet und/oder an der Führungsvorrichtung 19 bzw. den Führungselementen 20 laschenartig angebunden, insbesondere einstückig mit den Führungselementen 20 ausgebildet. Am Motorgehäuse, Motoraufnahmegehäuse (hier jeweils nicht vorgesehen) oder Schiebesitz 204 sind zumindest ein bevorzugt mehrere korrespondierendes in Umfangsrichtung und/oder in Radialrichtung relativ zur Höhenverstellachse 590 insbesondere nicht-elastisch verlagerbare Führungsmittel 610, insbesondere korrespondierende Führungsprofile 61 vorgesehen.

Die Führungselemente 20 weisen ferner radialelastische Formschlusselemente 105 auf. Diese sind als Lasche 106 ausgebildet. Sie bzw. die Lasche 106 ist/sind parallel zur Richtung der Achse 59 am Führungselement 20 angebunden. Sie bzw. die Lasche 106 ist/sind einstückig mit dem jeweiligen Führungselement 20 ausgebildet. Sie bzw. die Lasche 106 ist/sind an einer von vier Seiten angebunden, insbesondere so dass sie schwenkbar um den Anbindungsbereich ausgebildet ist. An den drei weiteren Seiten ist die Lasche 106 durch Ausnehmungen bzw. Nuten 107 vom restlichen Führungselement 20 getrennt bzw. freigestellt. Die Lasche 106 ist dazu vorgesehen bezogen auf die Achse 59 zumindest in Radialrichtung elastisch verlagerbar zu sein. Die Lasche 106 ist dazu vorgesehen die Abstützeinheit 100 spielfrei relativ zur Führungsvorrichtung 19 bzw. dem Führungselement 20 zu positionieren und/oder zumindest radial zu zentrieren - besonders auch bei höheren Belastungen. Die Lasche 106 dient der elastischen Abstützung der Abstützeinheit 100, insbesondere radial zur Achse 59. Die radialelastischen Formschlusselemente 105 können Überlastkräfte aufnehmen und/oder Vibrationen dämpfen. Sie können der definierten Beabstandung zumindest eines Teils des Führungselements 20 von der Abstützeinheit 100 dienen. Insbesondere einer Basis des Führungselements, die mit dem Chassis 45 verbunden ist. Das radialelastische Formschlusselement 105 bzw. die Lasche 106 kann der Vibrationsdämpfung dienen. Die Lasche 106 kann eine axiale Erstreckung in Richtung der Achse 59 aufweisen die zumindest einer maximalen Verlagerbarkeit bzw. dem Maß der Höhenverstellbarkeit entspricht. Die Abstützeinheit 100 kann einen Fortsatz 210 (vgl. Fig. 3, 5, 10 oder 11) aufweisen der dazu vorgesehen ist an der Lasche 106 anzuschlagen oder anzuliegen. Die Lasche 106 weist dafür eine Nut 108 auf, die sich in Richtung der Achse 59 erstreckt. Die Nut 108 ist zur Achse 59 hin konkav ausgebildet. Dadurch ist zumindest teilweise eine Zentrierung der Abstützeinheit 100 insbesondere in Radial und/oder Umfangsrichtung um die Achse 59 ermöglicht.

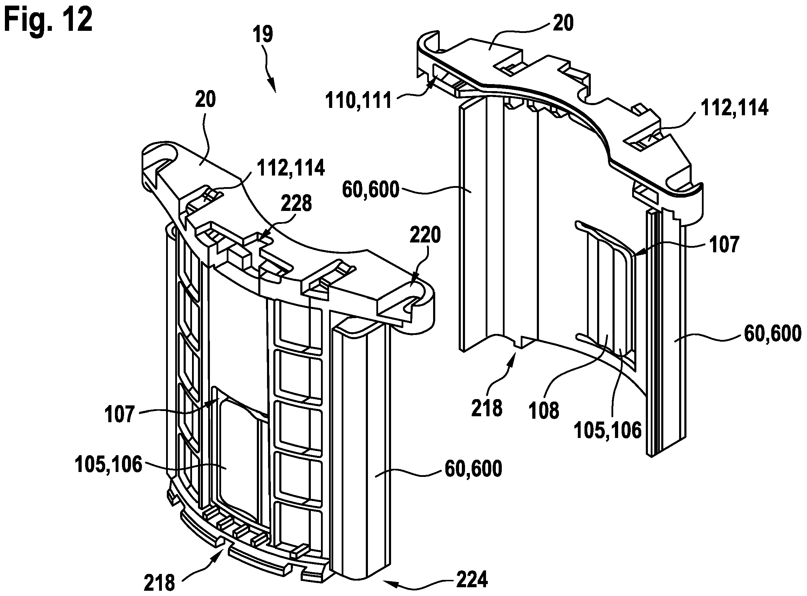

Dir Führungsvorrichtung 19 kann ferner zur insbesondere elastisch axialhemmenden Drehführung des Drehkörpers 118 der Höhenverstellvorrichtung 16 vorgesehen sein, insbesondere zur elastisch axialhemmenden Drehführung eines den Schiebesitz 204 treibenden Drehkörpers 118. Im oberen Bereich weisen die Führungselemente 20 einen Drehsitz 110 auf. Der Drehsitz 110 ist als Rundnut 111 ausgebildet. Die Rundnut 111 erstreckt sich in Radial- und Umfangsrichtung bezogen auch die Achse 59. Der Drehsitz 110 weist elastische Axialformschlusselemente 112, insbesondere vorgespannte Laschen 114 auf. Die Laschen 114 sind in Richtung der Achse 59 elastisch verlagerbar. Sie sind dazu vorgesehen einen Ringabschnitt 116 des Drehkörpers spielfrei zu positionieren. Dennoch sind sie dazu vorgesehen ein Verdrehen des Ringabschnitts 116 im Drehsitz 110 zu ermöglichen. Sie dienen der Vibrationsdämpfung und/oder Geräuschemissionsvermeidung. Der Ringabschnitt 116 ist insbesondere einstückig mit dem Drehkörper 118 ausgebildet. Der Drehkörper 118, insbesondere der Ringabschnitt 116 des Drehkörpers 118, ist dazu vorgesehen im Drehsitz 110 vorzugsweise reibungsarm zu drehen. Der Drehkörper 118 dreht insbesondere gleitend. Ein Spiel des Drehkörpers in Richtung der Achse 59 ist bevorzugt zumindest durch die elastische Axialformschlusselemente 112, bzw. Laschen 114 reduziert. Man könnte auch sagen, dass die elastische Aufnahme des Drehkörpers 118 durch axialelastisch verlagerbare Führungsmittel 216, insbesondere ausgebildet als elastische Axialformschlusselemente 112, insbesondere Laschen 114 oder dergleichen, bereitgestellt ist. (vgl. insb. Fig. 9 und 12)

Der Drehkörper 118 weist einen im Wesentlichen hohlzylinderförmigen Abschnitt auf. Dieser umgibt das Motoraufnahmegehäuse 36 zumindest teilweise. Er erstreckt sich senkrecht zur Standebene 56 und ist zum Betätigungselemente 22 hin zumindest im Wesentlichen verschlossen. Gewissermaßen weist er eine topfförmige Form auf. Er ist zur Seite der Standebene 56 geöffnet. Er weist das Gewinde 206 bzw. die Gewindeabschnitte 122 auf. Diese sind auf einer Mantelfläche des Drehkörpers 118 angeordnet, insbesondere der äußeren Mantelfläche, sozusagen als Außengewinde. Der Drehkörper 118 ist dazu vorgesehen um die Achse 59 gedreht zu werden. Dies kann motorisch oder manuell erfolgen. Im gezeigten Ausführungsbeispiel ist hierzu das Betätigungselement 22 vorgesehen. Das Betätigungselement 22 kann in Betätigungsrichtung 24 betätigt werden - hier in Umfangsrichtung gedreht werden. Das Betätigungselement 22 ist mit dem Drehkörper 118 lösbar verbunden, hier über eine Steckverzahnung 202. Eine Schraube 232 dient der axialen Sicherung des Betätigungselements 22 zum Drehkörper 118. Ein Abdeckmittel 234 zumindest der Abdeckung der Schraube 232.

Die Abstützeinheit 100 bzw. der Schiebesitz 204 weist das Gewinde 208 bzw. die Gewindeabschnitte 124 auf. Diese sind als Innengewinde ausgebildet. Die Gewindeabschnitte 124 der Abstützeinheit 100 sind dazu vorgesehen mit den Gewindeabschnitten 122 des Drehkörpers 118 gewindemäßig verbunden zu sein. Der Drehkörper 118 ist bei einer Verdrehung dazu vorgesehen eine Bewegung der Abstützeinheit 100 zu treiben. Die Abstützeinheit 100 wird bei Verdrehung des Drehkörpers 118 axial verlagert. Die Abstützeinheit 100 kann dadurch in Richtung der Achse 59 bzw. der Höhenverstellachse 590 axial verlagert werden. Durch Drehung des Drehkörpers 118 erfolgt eine Linearverschiebung des Schiebesitzes 204.

Die Abstützeinheit 100 bzw. der Schiebesitz 204 ist aus zwei Halbschalen 99, 101 aufgebaut, könnte aber auch anders aufgebaut sein. Die Abstützeinheit 100 ist zum Abstützten der Antriebseinheit 14, insbesondere zum Abstützen des die Antriebseinheit 14 aufnehmenden Motoraufnahmegehäuses 36 vorgesehen. Die Abstützeinheit 100 ist zusammen mit der Antriebseinheit 14 und der Werkzeugaufnahme 12 höhenverstellbar. Die Abstützeinheit 100 ist insbesondere linearverschieblich höhenverstellbar relativ zum Chassis 45 ausgebildet. Zwischen der Abstützeinheit 100 und der Antriebseinheit 14, insbesondere zwischen der Abstützeinheit 100 und dem die Antriebseinheit 14 aufnehmenden Motoraufnahmegehäuse 36, sind zumindest ein, bevorzugt mehrere elastische Trag- und Abstützelemente 102 angeordnet. Sie sind vorgesehen um die Antriebseinheit 14 relativ zur Abstützeinheit 100 schwingungsentkoppelnd abzustützen und zu tragen. Unter einem Tragen ist zu verstehen, dass eine Abstützung in alle drei Raumrichtungen über die Trag- und Abstützelemente 102 erfolgt - also radial, axial und in Umfangsrichtung. Die Trag- und Abstützelemente 102 sind insbesondere vorgesehen, um das die Antriebseinheit 14 aufnehmende Motoraufnahmegehäuse 36 relativ zur Abstützeinheit 100 schwingungsentkoppelnd abzustützen und zu tragen, insbesondere um im Übertragungsweg zum Chassis 45 eine Schwingungsentkoppelung zu erzeugen (vgl. insbesondere Fig. 3, 4 und 5) oder zu verbessern. Die Antriebseinheit 14 bzw. das die Antriebseinheit 14 aufnehmende Motoraufnahmegehäuse 36 und die Werkzeugaufnahme 12 sind zumindest im regulären Betrieb des Arbeitsgeräts 10 ausschließlich über die Trag- und Abstützelemente 102 abgestützt und getragen bzw. gehalten. Sie sind abgestützt gegenüber dem Chassis 45. Sie sind abgestützt gegenüber der relativ zum Chassis 45 höhenverstellbaren Abstützeinheit 100. Sie sind schwingungsentkoppelnd abgestützt gegenüber weiteren Bauteilen der Höhenverstelleinheit 16, insbesondere dem Drehkörper 118 und/oder der Führungsvorrichtung 19.

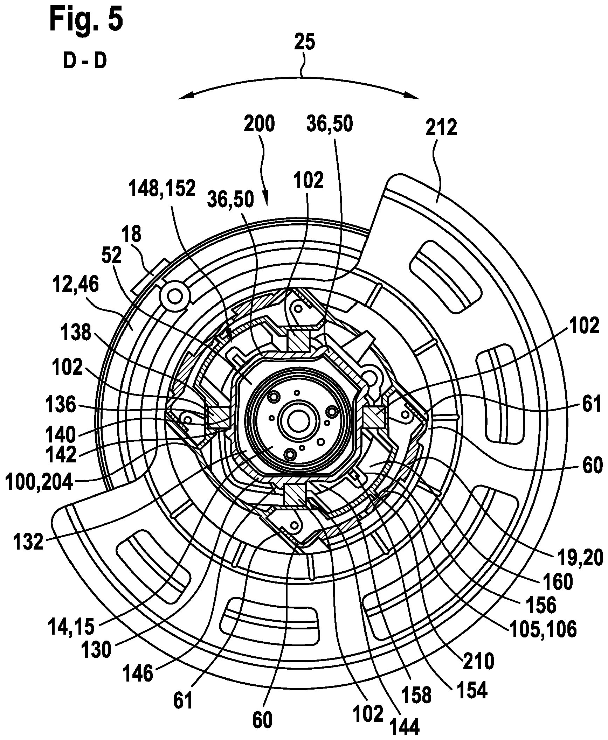

Fig. 4 und Fig. 5 zeigen im Schnitt C-C bzw. D-D die Trag- und Abstützelemente 102 in einer Schnittdarstellung. Die Trag- und Abstützelemente 102 sind blockförmig insbesondere quaderförmig ausgebildet. Gemäß Fig. 5 sind sie in regelmäßigen Abständen bzw. Winkeln, insbesondere um die Achse 59, zueinander angeordnet. Es sind vier Trag- und Abstützelemente 102 die jeweils im Abstand von 90° zueinander angeordnet sind sichtbar. Es ist sozusagen in jedem Quadranten ein Trag- und Abstützelemente 102 angeordnet. Sie sind in einer Ebene 126 angeordnet. Für die elastischen Trag- und Abstützelemente 102 sind mehrere Aufnahmevorrichtungen 134, 135 an dem die Antriebseinheit 14 aufnehmenden Motoraufnahmegehäuse 36 und an der Abstützeinheit 100 vorgesehen. Die Aufnahmevorrichtungen 134 sind als Anschlagflächen 136, 138, 140, 142 radial zur Achse 59 und in Umfangsrichtung bzw. tangential um die Achse 59 vorgesehen. Die Anschlagflächen 138, 142 sind, insbesondere bei in Umfangrichtung benachbarten Aufnahmevorrichtungen 134, in entgegengesetzte Umfangsrichtungen 25 durch Stege 144, 146 gestützt. Die Trag- und Abstützelement(e) 102 und die Aufnahmevorrichtungen 134 für das/die elastischen Trag- und Abstützelemente 102 benachbarter Quadranten sind bevorzugt dazu vorgesehen Kräfte in entgegengesetzte Umfangsrichtungen 25 um die Höhenverstellachse 590, abzustützen. Die Aufnahmevorrichtungen 134 können derart geformt sein, dass sie Flächenträgheitsmomentenoptimiert für Kräfte in Umfangsrichtung 25 ausgebildet sind, beispielsweise durch Stege und Querstege, die sich beispielsweise in Umfangsrichtung 25 erstrecken.

In einer Ebene 128 parallel zur Ebene 126 (vgl. Fig. 4) sind ebenfalls vier Trag- und Abstützelemente 102 angeordnet. Die Trag- und Abstützelemente 102 welche in der Ebene 128 angeordnet sind, sind axial in einem Endbereich des Motorgehäuses 33 angeordnet. In diesem Bereich ist auch das Motorgehäuse 33 von dem Motoraufnahmegehäuse 36 aufgenommen. Eine Außenkontur 130 des die Antriebseinheit 14 aufnehmenden Motoraufnahmegehäuses 36 ist von einer Innenkontur 132 der Abstützeinheit 100 beabstandet durch die Trag- und Abstützelemente 102. Es wird sozusagen ein Mindestabstand zwischen diesen Bauteilen erzielt. Dies dient der Vermeidung einer direkten Schwingungsübertragung und/oder Koppelung. Zumindest im regulären Betrieb des Arbeitsgeräts erfolgt eine schwingungsentkoppelnde Wirkung. Somit ist/sind zumindest im regulären Betrieb des Arbeitsgeräts 10 die Antriebseinheit 14 und/oder die Werkzeugaufnahme 12 und/oder das die Antriebseinheit 14 aufnehmende Motoraufnahmegehäuse 36, ausschließlich über das bzw. die elastischen Trag- und Abstützelement(e) 102 an der Abstützeinheit 100 bzw. dem Schiebesitz 204 gehalten bzw. getragen.

Das/die elastische Trag- und Abstützelement(e) 102 und/oder die Antriebseinheit 14 und/oder das die Antriebseinheit 14 aufnehmende Motoraufnahmegehäuse 36 und/oder die Abstützeinheit 100 sind ausgebildet, die Antriebseinheit 14 relativ zur Abstützeinheit 100 in einer Axialrichtung entlang der Höhenverstellachse 590, radial hierzu und/oder in Umfangsrichtung hierzu, bevorzugt in entgegengesetzte Umfangsrichtungen hierzu abzustützen. Die Abstützeinheit 100 ist aus zwei Halbschalen 99, 101 aufgebaut, die beim Verbinden, insbesondere beim Verschrauben, die elastischen Trag- und Abstützelemente 102 komprimieren können. Dadurch werden diese vorgespannt. Unter erhöhtem Kraftaufwand kann eine zusätzliche Verlagerung des Motoraufnahmegehäuses 36 relativ zur Abstützeinheit 100 erfolgen.

Es wird vorgeschlagen, das Überlastschutzmittel 148 (vgl. insb. Fig. 4 und 5), insbesondere Formschlussmittel 152, beispielsweise Anschlagmittel 154 vorgesehen sind. Insbesondere korrespondierenden Anschlagmittel 154, 156, 158, 160 sind an dem die Antriebseinheit 14 aufnehmenden Motoraufnahmegehäuse 36 und der Abstützeinheit 100 vorgesehen. Dadurch können Belastungen die einen Schwellwert überschreiten aufgenommen und/oder abgefedert werden. Sie sind dazu vorgesehen bei Erreichen einer maximalen Sollverformung der elastische Trag- und Abstützelemente 102 in Eingriff zu kommen. Sie können die Kräfte zumindest teilweise unter Umgehung der elastische Trag- und Abstützelemente 102 von dem Werkzeug 18, der Werkzeugaufnahme 12, der Antriebseinheit 14 und/oder dem Motoraufnahmegehäuse 36 auf die Abstützeinheit 100 und/oder das Chassis 45 übertragen. Sie sind zum Schutz vor einer den normalen Betrieb des Arbeitsgeräts 10 überschreitende Belastungen vorgesehen. Die Überlastschutzmittel 148 sind insbesondere als axial, radial und/oder tangential formschließende Mittel ausgebildet - relativ zur Achse 59 bzw. der Höhenverstellachse 590. Beispielsweise können ein oder mehrere am Motoraufnahmegehäuse 36 und der Abstützeinheit 100 in axial-radial-Richtung und/oder quer dazu in tangential-radial Richtung ausgebildete Rippen vorgesehen sein. Die Formschlusselemente beispielsweise Rippen überlappen sich derart, dass eine Bewegung in axial, radial und/oder tangential Richtung bzw. Umfangsrichtung 25 durch diese bei entsprechender Verlagerung blockiert wird. Ferner ist Fig. 5 zu entnehmen, dass das Motoraufnahmegehäuse 36 die Antriebseinheit 14 insbesondere den Motor 15 vollständig radial umgibt. Das Motorgehäuse 33 ist radial bezogen auf die Achse 59 allseitig beabstandet zum Motoraufnahmegehäuse 36. Auch das Motoraufnahmegehäuse 36 ist allseitig radial und axial beabstandet zum Abstützelement 100 ausgebildet.

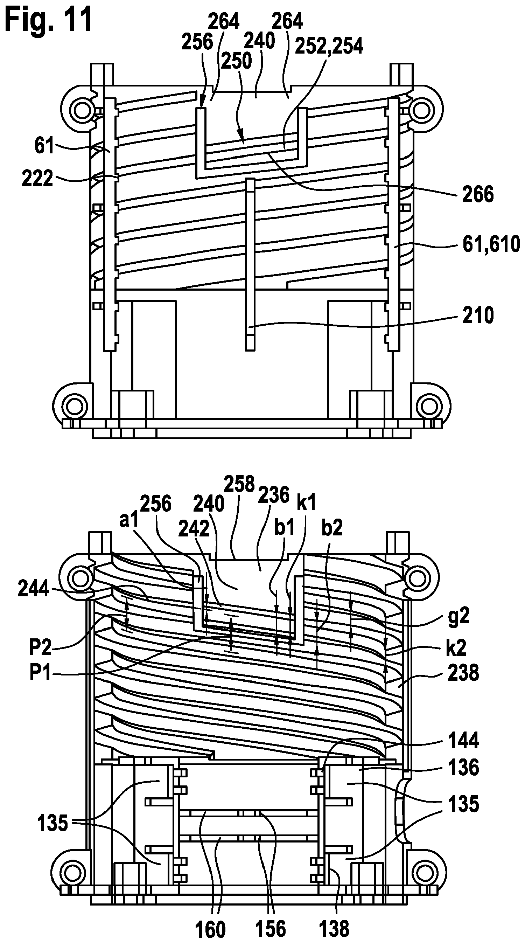

Den Fig. 10 und 11 ist zu entnehmen, dass das Gewinde 208 des Schiebesitzes 204 bzw. der Abstützeinheit 100 zumindest zwei Gewindeabschnitte 236, 238 aufweist. Der eine Gewindeabschnitt 236 ist ein elastisch verlagerbarer Gewindeabschnitt 236, bevorzugt ein radial- und/oder axial elastisch zur Gewindeachse und zum weiteren Gewindeabschnitt 238 verlagerbarer Gewindeabschnitt 236. Die Gewindeachse ist hier identisch mit der Achse 59 bzw. der Höhenverstellachse 590 ausgebildet. Der Gewindeabschnitt 236 umfasst Mittel, die gegenüber dem weiteren Gewindeabschnitt 238 eine Gewindezahnbreite b1 des einen Gewindeabschnitts 236 erhöhen und/oder eine Gewindegangbreite g1 des einen Gewindeabschnitts 236 verringern und/oder einen Versatz in der Steigung P1 der Gewindeabschnitte 236, 238 zueinander bewirken. Die Gewindezahnbreite b2 des Weiteren Gewindeabschnitts 238 ist gegenüber der Gewindezahnbreite b1 des einen Gewindeabschnitt 236 somit kleiner und/oder eine Gewindegangbreite g2 größer. Zu einer elastischen Verlagerbarkeit ist der eine Gewindeabschnitt 236 insbesondere an einer radial zur Gewindeachse elastisch verlagerbaren Lasche 240 aufgenommenen. Das Gewinde 208 weist also zumindest einen Gewindegang mit zumindest zwei Gewindegangabschnitten 236, 238 auf, wobei der eine Gewindegangabschnitt 236, insbesondere der eine elastisch verlagerbarer Gewindegangabschnitt 236, eine andere Steigung P1 und/oder eine andere Flankenbreite b1 aufweist als der weitere Gewindegangabschnitt 238 bzw. dessen Steigung P2 und/oder Flankenbreite b2 (vergleiche exemplarisch auch Vergrößerungsansicht Fig. 7 und 8).

Das Gewinde 208 weist zumindest zwei Gewindeabschnitte 236, 238 auf, die bezogen auf die Schraubenlinie des Gewindes 208 in Umfangsrichtung 25 aneinander angrenzen, wobei eine Gewindeflanke 242, insbesondere eine Gewindeflankenfläche, bevorzugt eine Gewindezahnflanke des einen relativ zum weiteren Gewindeabschnitt 238 bezogen auf die Schraubenlinie 244 und/oder Gewindeachse einen axialen Versatz a1 und/oder einen Versatz a1 normal zur Schraubenlinie aufweist. Die Gewindezahnbreite b1 und/oder Flankenbreite b1 und/oder Kopfbreite k1 des einen Gewindeabschnitts 236 ist größer als die des Weiteren Gewindeabschnitts 238.

Das Mittel ist hier also eine Gewindeflanke 242 mit einer anderen Steigung P1 und/oder einer andere Flankenbreite b1 und/oder anderen Zahnkopfbreite k1 als die des Weiteren Gewindeabschnitts 238 - bzw. deren Steigung P2, Flankenbreite b2 und/oder Zahnkopfbreite k2. Das Mittel kann auch eine Gewindeflanke 242, insbesondere eine Gewindeflankenfläche, bevorzugt eine Gewindezahnflanke sein, die relativ zum weiteren Gewindeabschnitt 238 einen axialen Versatz a1 und/oder einen Versatz Normal zur Schraubenlinie 244 des Gewindeganges aufweist. Das Mittel kann hier auch hier eine größere Gewindezahnbreite und/oder Flankenbreite b1 und/oder eine kleinere Gewindegangbreite g1 bzw. Gewindezahnlücke des einen Gewindeabschnitts 236 gegenüber der Gewindezahnbreite b2 bzw. Flankenbreite b2 bzw. Gewindegangbreite g2 bzw. Gewindezahnlücke des Weiteren Gewindeabschnitts 238 sein. Die Gewindeflanke 242 kann aber auch als alleinstehende Flanke ausgebildet sein und gegenüber dem Weiteren Gewindeabschnitt 236 einen Versatz a1 aufweisen.

Dadurch kann ein axiales Spiel (vgl. insb. Fig. 2, 7 und 8 und siehe insb. BZ 246, 248) der Gewinde 206, 208 zueinander zumindest reduziert und/oder einseitig verlagert werden. Ein Spiel 246 kann definiert eingegrenzt oder zu einer vorteilhaften Seite hin verlagert werden. Im Bereich des einen Gewindeabschnitts 236 wird es vorteilhaft an beiden Gewinde- bzw. Zahnflanken 242, 243 eliminiert. Die Zahnbreite bzw. Flankenbreite b1 verengt und/oder füllt vollständig und/oder beidflankenseitig die Zahnlückenbreite bzw. den Flankenabstand des Gewindes 206 bzw. des Gewindeganges des Gewindes 206 des Drehkörpers 118 aus. Dennoch ist ein zumindest spielreduziertes verdrehen der Gewinde 206, 208 zueinander weiterhin möglich. Einerseits weil der Gewindeabschnitt 236 radialelastisch verlagerbar zum Gewindeabschnitt 238 bzw. dem Gewinde 206 des Drehkörpers aufgenommen ist und/oder andererseits, weil die Flanken durch die insbesondere axiale Freistellung 249 (vgl. Fig. 7, 8, 10) axialelastisch zueinander ausgebildet sind. Sprich die Zahnflanken 242, 243 eines Gewindezahns sind zueinander verlagerbar, insbesondere elastisch zueinander verlagerbare, bevorzugt gespreizt vorgespannten zueinander verlagerbar ausgebildet. Dies kann auch oder zudem erzielt werden indem zwischen den Zahnflanken 242, 243 des Gewindezahns 252 eine Materialeinkerbung 254 vorgesehen ist. Das Mittel könnte zumindest auch eine Fläche, insbesondere eine Gleitfläche, insbesondere eine zahnflankengleich wirkende Fläche sein, die eine Gewindegangbreite verengt. Dazu wäre dann kein vollständiger Gewindezahn 252, sondern nur eine Flanke z.B. die Flanke 242 oder ein wirkgleicher Körper erforderlich.

Vorteilhaft kann eine Geräuschentwicklung bzw. ein Klappern der Gewinde zueinander, insbesondere auf unebenem Terrain und/oder bei einer ungewuchteten Schneidvorrichtung 200 vermieden werden. Darunter, dass der eine Gewindeabschnitt 236 eine andere Steigung P1 und/oder andere Gewindezahnbreite b1 (bzw. Flankenbreite) bzw. Gewindegangbreite g1 (bzw. Gewindezahnlücke) aufweist, sollen keine Toleranz- und/oder Verschleißabweichung verstanden werden. Vielmehr sind diese Abweichungen konstruktiv gewählt bzw. vorgegeben. Die Flankenbreiten b1 zu b2 unterscheiden sich an identischen Flankendurchmessern. Vorzugsweise weist der gesamte elastisch verlagerbare Gewindegangabschnitt 236 eine andere insbesondere eine andere konstante Steigung P1 und/oder Flankenbreite b1 auf, als der weitere Gewindegangabschnitt 238. Er könnte aber auch zumindest partiell eine andere Steigung P1 und/oder eine andere Flankenbreite b1 aufweisen als der weitere Gewindegangabschnitt 238.

Die Gewindeabschnitte 236, 238 sind insbesondere entlang einer Schraubenlinie des Gewindes 208 und/oder entlang der Umfangsrichtung 25 des Gewindes 208 benachbarte zueinander ausgebildet. Zwischen den Gewindeabschnitten 236, 238 ist eine Nut 256 vorgesehen. Die Nut 256 umgibt den einen Gewindeabschnitt 236 vorteilhaft an drei Seiten, so dass der eine Gewindeabschnitt 236 an einer Lasche 240 bzw. nur einseitig am Gewinde 208 bzw. dem Schiebesitz 204 bzw. der Abstützeinheit 100 angebunden ist. Die Lasche ist insbesondere torsionsbalkenartig am Schiebesitz 204 fixiert. Der elastisch radial zur Gewindeachse verlagerbaren Gewindeabschnitt 236 ist über einen sich in Umfangsrichtung 25 zur Gewindeachse erstreckenden Abschnitt 264 an dem einen Gewinde 208 des Schiebesitzes 204 angebunden. Der Abschnitt 264 ist als Umfangssteg und/oder Torsionsbalken ausgebildet. Der elastisch verlagerbare Gewindeabschnitt 236 ist an der radialelastisch verlagerbaren Lasche 240 aufgenommen ist, insbesondere an einer an dem Abschnitt 264 bzw. Umfangssteg und/oder Torsionsbalken angebundenen Lasche 240, insbesondere aufgenommen an einem freien Ende 266 der Lasche 240, bevorzugt beabstandet zum Abschnitt 264 aufgenommen, insbesondere beabstandet um mindestens eine Steigungshöhe P1, P2 zum Abschnitt 264 aufgenommen. Der Abschnitt 264 und/oder die Lasche 240 ist/sind an einem distalen Ende 258 des Gewindes 208 des Schiebesitzes 204 fixiert.

Dadurch ist eine elastische Verlagerung des einen Gewindeabschnitts 236 in Radialrichtung relativ zur Gewindeachse möglich. In Verbindung mit der Einkerbung 254 ist aber auch eine elastische Verlagerung der Flanken 242, 243 zueinander möglich. In Umfangsrichtung 25 benachbart, soll insbesondere in Umfangsrichtung desselben Gewindeganges benachbart bedeuten. Zu Darstellungszwecken kann Fig. 7 und 8 hierzu auch einen anderen Gewindegang referenzieren. Vorteilhaft erstrecken sich weitere Gewindeabschnitte 238 in beiden Umfangsrichtungen 25 ausgehend vom elastisch verlagerbaren Gewindeabschnitt 236. Unter einer Schraubenlinie ist insbesondere die Steigungslinie oder Hauptsteigungslinie bzw. Zahnflankenlinie an einem konstanten Flankendurchmesser und/oder am Kopf des Gewindes 208 zu verstehen. Unter einer Steigung P1, P2 (eingängiges Gewinde) soll in diesem Zusammenhang und zur Vereinfachung auch eine Teilung (mehrgängiges Gewinde) verstanden werden. Durch die vorgenannten Merkmale des einen Gewindeabschnitts 236 kann vorteilhaft zumindest teilweilweise eine Drehhemmung des Drehkörpers 118 zum Schiebesitz 204 erzielt werden.

Der eine Gewindeabschnitt 236 nimmt vorteilhaft partiell ein Spiel 246 zwischen den Gewinden 206, 208 bzw. zwischen Innen- und Außengewinde zumindest im Bereich des einen Gewindeabschnitts 236. Dadurch, dass vorteilhaft aber nur eine Flanke 242, insbesondere Gewindeflanke oder Gewindezahnflanke des einen Gewindeabschnitts 236 axial versetzt a1 ist wird dadurch ein Spiel 250 an einer Flankenseite des Weiteren Gewindeabschnitts 238 bzw. der weiteren Gewindegänge zwischen den Gewinden 206, 208 insgesamt genommen. An der axial gegenüberliegenden Flankenseite 248 (vgl. Fig. 7) liegt ein definiertes insbesondere konstantes Spiel 248 vor, dass vorteilhaft nur bei Verlagerung, insbesondere unter besonderen Belastungsumständen des einen Gewindeabschnitts 236, reduziert wird. Dieses Spiel 248 bzw. mangelnde Spiel 250 liegt an den weiteren Gewindeabschnitten 238, insbesondere auch weiterer Gewindegänge vor. Durch den einen Gewindeabschnitt 236 werden die korrespondierenden Gewinde 206, 208 also derart verlagert, dass zumindest eine Flanke des Außen- und Innengewindes bzw. des Schiebesitzes 204 und des Drehkörpers 118, spielfrei aneinander anliegen. Vorteilhaft werden die korrespondierenden Gewinde 206, 208 durch den Flankenversatz a1 bzw. die erhöhte Flankenbreite b1 derart verlagert, dass zumindest eine Gewindeflanke 260 des angrenzenden Weiteren Gewindeabschnitts 238 des Gewindes 208 und zwei Gewindeflanken 242, 243 des einen Gewindeabschnitts 236 spielfrei am Gegengewinde 206 anliegen. Prinzipiell können die vorgenannten Merkmale bzgl. der Gewindeabschnitte 236, 238 auch am Gewinde 206 des Drehkörpers 118 vorgesehen sein, insbesondere am Außengewinde.

Die Fig. 2 zeigt einen autonomen Rasenmäher, aufweisend zumindest ein Chassis 45, einen Motor 15 und eine von dem Motor 15 antreibbare Schneidvorrichtung 200, ferner aufweisend eine Höhenverstellvorrichtung 16 zumindest zu einer Verlagerung der Schneidvorrichtung 200 und des Motors 15 relativ zum Chassis 45, zumindest zu einer Einstellung einer Arbeitshöhe h der Schneidvorrichtung 200, insbesondere zu einer Einstellung einer Schnitthöhe s eines Schneidwerkzeugs 18 der Schneidvorrichtung 200. Die Höhenverstellvorrichtung 16 umfasst einen hohlzylindrischen Drehkörper 118 und einen den hohlzylindrischen Drehkörper 118 umgebenden Schiebesitz 204, die korrespondierende Gewinde 206, 208 aufweisen, so dass durch eine Drehung des Drehkörpers 118 um die Höhenverstellachse 590 eine Linearverschiebung des Schiebesitzes 204 erfolgt. Das Gewinde 208 des Schiebesitzes 204 weist einen zumindest elastisch verlagerbaren Gewindeabschnitt 236 auf. Dieser ist elastisch radial zur bzw. von der Drehachse (Achse 59) des Drehkörpers 118 verlagerbarer Gewindeabschnitt 236. Er ist an einer Lasche 240 elastisch verlagerbar aufgenommenen. Der elastisch verlagerbare Gewindeabschnitt 236 weist vorteilhaft im mit dem Drehkörper 118 unverbundenen Zustand den im Wesentlichen gleichen Kerndurchmesser wie das übrige Gewinde 208 bzw. die in Umfangsrichtung benachbarten Gewindeabschnitte 238 auf.

Der Motor 15 und/oder das Motoraufnahmegehäuse 36 sind innerhalb des Drehkörpers 118 verlagerbar ausgebildet, insbesondere höhenverstellbar und/oder radial, axial und in Umfangsrichtung zumindest geringfügig verlagerbar, um schwingungsentkoppelnde Beabstandung zu gewährleisten. Der Schiebesitz 204 ist mit dem Motor 15 bzw. Motoraufnahmegehäuse 36 gemeinsam verlagerbar ausgebildet. Der Schiebesitz 204 ist drehgehemmt, insbesondere drehgehemmt um eine Höhenverstellachse 590 ausgebildet. Dazu ist die axiale Führungsvorrichtungen 19 vorgesehen. Diese bildet auch einen Drehsitz 110 für den Drehkörper 118 aus. Über Formschlusselemente 112 ist der Drehsitz 110 axialgehemmt elastisch geringfügig verlagerbar. Über Formschlusselemente an der Führungsvorrichtung 19 und dem Schiebesitz 204, insbesondere korrespondierende Führungsmittel 600, 601 bzw. Führungsprofile 60, 61, ist der Drehkörper 118 geringfügig umfangselastisch drehgehemmt aufgenommen. Die Führungsvorrichtung 19, insbesondere die Führungselemente 20 bilden vorteilhaft ein zusätzliches Bauteil zwischen Chassis 45, dem Drehkörper 118 und dem Schiebesitz 204, um zumindest zusätzlich die Schneidvorrichtung 200 und/oder den Motor 15 bzw. die Antriebseinheit 14 schwingungsentkoppelnd und/oder vibrationsdämpfend am Rasenmäher 11 bzw. Chassis 45 aufzunehmen. Die Führungsvorrichtung 19 bzw. Führungselemente 20 sind fest mit dem Chassis 45 verbunden. Sie stellen insbesondere mit ihren Führungsmitteln, zumindest Teile einer in gewisser Weise schwimmenden Lagerung der Schneidvorrichtung 200 und des Motors 15 bzw. der Antriebseinheit 14 und/oder der Höhenverstellvorrichtung 16 bereit. Der Schiebesitz 204 ist radial drehgehemmt durch die Führungsvorrichtung 19.

Die Schneidvorrichtung 200, der Motor 15, das Motoraufnahmegehäuse 36 und der Schiebesitz 204 sind gemeinsam axial verlagerbar ausgebildet. Sie sind verlagerbar durch die Höhenverstellvorrichtung 16, bzw. durch Drehen des Drehkörpers 118 der den Schiebesitz 204 treibt. Der Schiebesitz 204 dient als Abstützvorrichtung bzw. Abstützeinheit 100 für die Antriebseinheit 14 bzw. den Motor 15 und/oder das den Motor 15 aufnehmende Motoraufnahmegehäuse 36, so dass zumindest die Schnitt- und Reaktionskräfte der Schneidvorrichtung 200 und Antriebskräfte der Antriebseinheit 14 über die Trag- und Abstützelemente 102 auf den Schiebesitz 204 übertragen werden.

Der Motor 15 und/oder das Motoraufnahmegehäuse 36 sind innerhalb des Drehkörpers 118 verlagerbar angeordnet. Der Drehkörper 118 umgibt den Motor 15 und/oder das Motoraufnahmegehäuse 36 zumindest teilweise, im Wesentlichen vollständig radial. Der Schiebesitz 204 ist zumindest mittelbar über die Trag- und Abstützelemente 102 mit dem Motor 15 bzw. Motoraufnahmegehäuse 36 und der Schneidvorrichtung 200, die an der Antriebswelle 48 des Motors 15 fixiert ist, verbunden. Sie sind gemeinsam verlagerbar ausgebildet. Sie sind drehgehemmt ausgebildet.

Der elastisch verlagerbare Gewindeabschnitt 236 ist verlagerbar relativ zum Gewinde 208 des Schiebesitzes 204 bzw. zu weiteren Gewindeabschnitten 238 des Gewindes 208 ausgebildet. Zudem ist der elastisch verlagerbare Gewindeabschnitt 236 verlagerbar relativ zum Gewinde 206 des Drehkörpers 118 ausgebildet. Der elastisch verlagerbare Gewindeabschnitt 236 ist einstückig mit dem Gewinde 208 und/oder dem Schiebesitz 204 ausgebildet. Der elastisch verlagerbare Gewindeabschnitt 236 weist eine Gewindezahnbreite b1 auf die größer ist und/oder eine Gewindezahnlücke g1 die kleiner ist als die Gewindezahnbreite b2 bzw. Gewindezahnlücke g2 weiterer Gewindeabschnitte 238 des Gewindes 208 des Schiebesitzes 204. Es sind zwei elastisch verlagerbare Gewindeabschnitte 236 an bezüglich der Gewindeachse bzw. der Höhenverstellachse 590 gegenüberliegenden Seiten vorgesehen. Sie greifen in unterschiedliche Gewindegänge des Gewindes 206 des Drehkörpers 118. Insbesondere dadurch verkeilen die Gewinde 206, 208 nicht zueinander. Der bzw. die elastisch verlagerbaren Gewindeabschnitt 236 weisen eine Gewindezahnbreite b1 auf die zumindest im Wesentlichen der Gewindezahnlücke eines Gewindeganges des Drehkörpers 118 entspricht. Dadurch kann zumindest partiell in einem Gewindeabschnitt des Drehkörpers 118 vorteilhaft im gesamten Gewinde ein Gewindespiel verringert oder eliminiert werden. Durch die elastische Verlagerbarkeit, kann der Gewindeabschnitt 236 jedoch zumindest nach radial außen verlagert bzw. herausgezwängt werden, insbesondere um eine Verdrehung von Drehkörper 118 und Schiebesitz 204 zu ermöglichen. Zudem können die Flanken 242 bzw. Zahnflanken des elastisch verlagerbaren Gewindeabschnitts 236 auch zueinander elastisch verlagerbar ausgebildet sein, so dass die Flankenbreite b1 bzw. die Zahnbreite bei Krafteinwirkung elastisch nachgiebig verringert werden kann. Zumindest durch die elastische Verlagerbarkeit des/der elastisch verlagerbaren Gewindeabschnitte 236 und/oder elastisch verlagerbaren Flanken 242, 243 ist daher weiterhin eine Drehung der Gewinde 206, 208 von Drehkörper 118 und Schiebesitz 204 möglich. Auch dadurch kann eine Selbsthemmung der Gewinde 206, 208 von Drehkörper 118 und Schiebesitz 204 verbessert werden und/oder eine selbsthemmende Wirkung der als Trapezgewinde ausgebildeten Gewinde 206, 208 verstärkt werden. Eine unbeabsichtigte Höhenverstellung der Höhenverstellvorrichtung 16 kann auch dadurch vermieden werden. Auch bei Verschleiß der Gewinde 206, 208 an Drehkörper 118 und/oder Schiebesitz 204, kann der elastisch verlagerbare Gewindeabschnitt 236 diese Abnutzung mitunter ausgleichen. Der elastisch verlagerbare Gewindeabschnitt 236 könnte auch nach radial innen vorgespannt ausgebildet sein.

Der elastisch verlagerbare Gewindeabschnitt 236 ist im Bereich eines zum Motoraufnahmebereich des Schiebesitzes 204, bzw. zum Bereich wo die Trag- und Abstützelemente 102 angeordnet sind, distal angeordneten Endes 258 des Schiebesitzes 204 angeordnet, insbesondere im Bereich eines distalen Drittels des Gewindes 206 des Schiebesitzes 204. Dadurch kann der elastisch verlagerbare Gewindeabschnitt 236 über die gesamte vorgesehene Höhenverstelldistanz im Eingriff mit dem Drehkörper 118 verbleiben. Es kann somit erzielt werden, dass der elastische verlagerbare Gewindeabschnitt 236 über den gesamten Höhenverstellweg im Eingriff mit dem Gewinde 206 des Drehkörpers 118 steht. Dadurch, dass der elastisch verlagerbare Gewindeabschnitt 236 am Schiebesitz 204, insbesondere in diesem Bereich angeordnet ist, sind nicht mehrere axialversetzte elastisch verlagerbare Gewindeabschnitte 236 am Schiebesitz 204 erforderlich. Insbesondere aus der Vergrößerungsdarstellung in Fig. 7 und 8 geht ferner hervor, dass eine, bezogen auf die Höhenverstellachse 590 untere Flanke 260 des Gewindes 208 des Schiebesitzes 204 an einer oberen Flanke 262 des Gewindes 206 des Drehkörpers 118 anliegt. Der breitere Gewindezahn 252 des insbesondere elastisch verlagerbaren Gewindeabschnitts 236 ist also derart versetzt angeordnet (vgl. Fig. 11), hier insbesondere mittels eines Versatzes a1 entlang der Höhenverstellachse 590 nach oben, dass das Gewinde 208 mit einer unteren Flanke 260 des Gewindes 208 am Gewinde 206 des Drehkörpers 118 anliegt. Dies ist vorteilhaft, da auch die Schwerkraft der Schneidvorrichtung 200 und/oder der Antriebseinheit 14 und/oder des Motoraufnahmegehäuses 36 den Schiebesitz 204 tendenziell in diese Richtung verlagern würden. Zur Überwindung des Spiels ist also auch eine Überwindung der Gewichtskraft dieser Komponenten erforderlich. Durch die Anordnung und/oder Ausgestaltung des Gewindezahns an der Lasche 240 die relativ steif in Richtung der Höhenverstellachse 590 ausgebildet ist, ist eine axiale Verlagerung des elastisch verlagerbaren Gewindeabschnitts 236 zumindest erschwert. Eine radiale Verlagerung erfordert weniger Widerstand. Dadurch das die Lasche axial und nicht in Umfangsrichtung am Schiebesitz 204 bzw. am Gewinde 208 fixiert bzw. einseitig befestig ist, ist Ihre Nachgiebigkeit in axialer Richtung gering bzw. die Anordnung axial verhältnismäßig steif.

Vorteilhaft kann ein Spiel zwischen Drehkörper 118 und Schiebesitz 204 zumindest vermieden oder eliminiert werden. Der elastisch verlagerbare Gewindeabschnitt 236 kann zur Dämpfung, insbesondere zur Vibrationsdämpfung vorgesehen sein. Vibrationen der Schneideinheit bzw. Schneidvorrichtung 200 und/oder des Motors 15, insbesondere im Übertragungsweg auf das Chassis 45 und/oder Gehäuse 34 können gedämpft werden. Die Geräuschemission des Rasenmähers 11 kann reduziert werden. Eine Geräuschentwicklung, insbesondere Klappergeräusche oder dergleichen können vermieden werden. Insbesondere wird ein Radial- oder Axialspiel zwischen Drehkörper 118 und Schiebesitz 204 reduziert oder verhindert. Eine Drehhemmung kann erzielt werden. Die Drehhemmung kann jedoch bei einer Betätigungsabsicht überwunden werden, so dass eine zur Höhenverstellung aufzuwenden Kraft verhältnismäßig gering bleibt. Es ist ein kostengünstiges Mittel zur Schwingungsvermeidung bzw. Geräuschvermeidung.

Der Schiebesitz 204 ist ferner linearverschieblich an der äußeren Mantelfläche des Drehkörpers 118 aufgenommen bzw. an dessen Gewinde 206. Ein den Motor 15 insbesondere abdichtend aufnehmendes Motoraufnahmegehäuse 36 ist mit dem Schiebesitz 204 derart verbunden, dass das Motoraufnahmegehäuse 36 innerhalb des zylindrischen Drehkörpers 118 aufgenommen ist, insbesondere innerhalb einer inneren zylindrischen Mantelfläche des Drehkörpers 118, insbesondere linearverschieblich zusammen mit dem Schiebesitz 204. Der Drehkörper 118 weist ein Außengewinde und der Schiebesitz 204 ein Innengewinde auf, insbesondere um an der äußeren Mantelfläche des Drehkörpers 118 linearverschieblich verlagerbar aufgenommen zu sein. Dadurch kann eine sehr kompakte Bauweise der Höhenverstellvorrichtung 16 und/oder des Motoraufnahmegehäuses 36 und/oder des Rasenmähers 11 erzielt werden. Es wird eine den Motor 15 abgedichtete Bauweise ermöglicht. Es wird eine vibrationsdämpfende Bauweise ermöglicht.

## Patentansprüche

1. Rasenmäher (11), insbesondere autonomer Rasenmäher (11), aufweisend zumindest ein Chassis (45), einen Motor (15) zum Antrieb einer Schneidvorrichtung (200) und eine Höhenverstellvorrichtung (16) zu einer Verlagerung der Schneidvorrichtung (200) und des Motors (15), insbesondere eines den Motor (15) aufnehmenden Motoraufnahmegehäuses (36), relativ zum Chassis (45), zumindest zu einer Einstellung einer Arbeitshöhe (h) der Schneidvorrichtung (200) relativ zum Chassis (45), insbesondere zu einer Einstellung einer Schnitthöhe (s) eines Schneidwerkzeugs (18) der Schneidvorrichtung (200), wobei zwischen dem Chassis (45) und einer Abstützeinheit (100) bzw. einem Schiebesitz (204) zum Halten und Tragen des Motors (15) und/oder zum Halten und Tragen eines den Motor (15) aufnehmenden Motoraufnahmegehäuses (36), Führungsmittel (600) zur drehhemmenden und axialen Führung der Abstützeinheit (100) bzw. des Schiebesitzes (204) relativ zum Chassis (45) um bzw. in Höhenverstellachsrichtung (590) vorgesehen sind, **dadurch gekennzeichnet, das** das oder die Führungsmittel (600) in Umfangsrichtung um die Höhenverstellachse (590) elastisch verlagerbar ausgebildet sind, bevorzugt wobei die Führungsmittel (600) Teil einer Führungsvorrichtung (19) und/oder zumindest eines Führungselements (20) sind.

2. Rasenmäher, zumindest nach Anspruch 1, **dadurch gekennzeichnet, dass** der Rasenmäher (11) eine separat vom Chassis (45) ausgebildete Führungsvorrichtung (19) umfasst die zumindest ein Führungselement (20) aufweist, das bezogen auf eine Höhenverstellachse (590) der Höhenverstellvorrichtung (16) zur zumindest drehhemmenden Axialführung eines Schiebesitzes (204) und zur zumindest axialhemmenden Rotationsführung eines Drehkörpers (118) der Höhenverstellvorrichtung (16) ausgebildet ist.

3. Rasenmäher (11), zumindest nach einem der vorhergehenden Ansprüche, **dadurch gekennzeichnet, dass** die Führungsvorrichtung (19) mehrere, insbesondere zwei Führungselemente (19) aufweist, insbesondere bezogen auf die Höhenverstellachse (590) einander gegenüberliegende Führungselemente (20).

4. Rasenmäher (11), zumindest nach einem der vorhergehenden Ansprüche, **dadurch gekennzeichnet, dass** die Führungsvorrichtung (19) bzw. das/die Führungselement(e) (20) fest mit dem Chassis (45) verbindbar sind, insbesondere verschraubt und/oder formschlüssig verbunden sind.

5. Rasenmäher (11), zumindest nach einem der vorhergehenden Ansprüche, **dadurch gekennzeichnet, dass** die Führungsvorrichtung (19) zur beabstandenden und/oder schwingungsentkoppelnden Aufnahme der Höhenverstellvorrichtung (16) am Chassis (45) vorgesehen ist, insbesondere zur beabstandenden und/oder schwingungsentkoppelnden, tragenden und abstützenden Aufnahme der Höhenverstellvorrichtung (16) am Chassis (45), bevorzugt zur beabstandenden und/oder schwingungsentkoppelnden, tragenden und abstützenden Aufnahme zumindest der Höhenverstellvorrichtung (16), des Motors (15) und der Schneidvorrichtung (200) am Chassis (45).

6. Rasenmäher (11), zumindest nach einem der vorhergehenden Ansprüche, **dadurch gekennzeichnet, dass** die Führungsvorrichtung (19) bzw. das/die Führungselement(e) (20) zumindest ein, bevorzugt mehrere elastisch verlagerbare(s) Führungsmittel (112, 600) aufweist(en), insbesondere axial, radial und/oder umfangselastisch verlagerbare(s) Führungsmittel (112, 600), insbesondere ausgebildet verlagerungshemmend in Axial- oder Radial- und/oder in Umfangsrichtung (25) bezogen auf eine Höhenverstellachse (590) der Höhenverstellvorrichtung (16) zumindest auf einen Drehköper (118) und/oder einen Schiebesitz (204) der Höhenverstellvorrichtung (16) zu wirken.

7. Rasenmäher (11), zumindest nach einem der vorhergehenden Ansprüche, **dadurch gekennzeichnet, dass** das/die Führungsmittel (600) zumindest zur drehhemmenden Axialführung des Schiebesitzes (204) umfangselastisch verlagerbar, insbesondere umfangs- und radialelastisch verlagerbar ausgebildet ist/sind.

8. Rasenmäher (11), zumindest nach einem der vorhergehenden Ansprüche, **dadurch gekennzeichnet, dass** das/die Führungsmittel (600) laschenartig am Führungselement (20) angebunden, insbesondere umfangs- und radialelastisch verlagerbar am Führungselement (20) angebunden ist/sind.

9. Rasenmäher (11), zumindest nach einem der vorhergehenden Ansprüche, **dadurch gekennzeichnet, dass** das/die Führungsmittel (600) als Führungsprofil (60), insbesondere als Führungsschiene, insbesondere als Gleitführungsschiene ausgebildet ist/sind.

10. Rasenmäher (11), zumindest nach einem der vorhergehenden Ansprüche, **dadurch gekennzeichnet, dass** am Schiebesitz (204) zumindest ein bevorzugt mehrere insbesondere korrespondierende(s) in Umfangsrichtung (25) und/oder in Radialrichtung relativ zur Höhenverstellachse (590) nicht-elastisch verlagerbare(s) Führungsmittel (610), insbesondere als Führungsprofil (61), insbesondere als Führungsschiene, bevorzugt als Gleitführungsschiene ausgebildete Führungsmittel (610).

11. Rasenmäher (11), zumindest nach einem der vorhergehenden Ansprüche, **dadurch gekennzeichnet, dass** das/die Führungsmittel (600, 610) einstückig mit dem Führungselement (20) bzw. dem Schiebesitz (204) ausgebildet ist/sind.

## Claims

1. Lawnmower (11), in particular autonomous lawnmower (11), having at least a chassis (45), a motor (15) for driving a cutting device (200), and a height-adjustment device (16) for displacement of the cutting device (200) and of the motor (15), in particular a motor-receiving housing (36) which receives the motor (15), relative to the chassis (45), at least for setting a working height (h) of the cutting device (200) relative to the chassis (45), in particular for setting a cutting height (s) of a cutting tool (18) of the cutting device (200), wherein, between the chassis (45) and a support unit (100) or a sliding seat (204), for holding and bearing the motor (15) and/or for holding and bearing a motor-receiving housing (36) which receives the motor (15), there are provided guide means (600) for rotation-inhibiting and axial guidance of the support unit (100) or sliding seat (204) relative to the chassis (45) about or in a height-adjustment-axis direction (590), **characterized in that** the one or more guide means (600) are designed to be elastically displaceable in a circumferential direction about the height-adjustment axis (590), preferably wherein the guide means (600) are part of a guide device (19) and/or of at least one guide element (20).

2. Lawn mower (11), at least according to Claim 1, **characterized in that** the lawnmower (11) comprises a guide device (19) which is formed separately from the chassis (45) and which has at least one guide element (20) which, in relation to a height-adjustment axis (590) of the height-adjustment device (16), is configured for at least rotation-inhibiting axial guidance of a sliding seat (204) and for at least axially inhibiting rotational guidance of a rotary body (118) of the height-adjustment device.

3. Lawnmower (11), at least according to either of the preceding claims, **characterized in that** the guide device (19) has multiple, in particular two, guide elements (19), in particular guide elements (20) which are situated opposite one another in relation to the height-adjustment axis (590).

4. Lawnmower (11), at least according to one of the preceding claims, **characterized in that** the guide device (19) or the one or more guide elements (20) are fixedly connectable, in particular connected by screw connection and/or in a form-fitting manner, to the chassis (45).

5. Lawnmower (11), at least according to one of the preceding claims, **characterized in that** the guide device (19) is provided for receiving the height-adjustment device (16) in a spaced-apart manner and/or with oscillation-decoupling action on the chassis (45), in particular for receiving the height-adjustment device (16) in a spaced-apart manner and/or with oscillation-decoupling, bearing and supporting action on the chassis (45), preferably for receiving at least the height-adjustment device (16), the motor (15) and the cutting device (200) in a spaced-apart manner and/or with oscillation-decoupling,bearing and supporting action on the chassis (45).

6. Lawnmower (11), at least according to one of the preceding claims, **characterized in that** the guide device (19) or the one or more guide elements (20) has/have at least one, preferably multiple, elastically displaceable guide means (112, 600), in particular axially, radially and/or circumferentially elastically displaceable guide means (112, 600), in particular configured to act at least on a rotary body (118) and/or a sliding seat (204) of the height-adjustment device (16) with displacement-inhibitingaction in an axial or radial and/or in a circumferential direction (25) in relation to a height-adjustment axis (590) of the height-adjustment device (16) .

7. Lawnmower (11), at least according to one of the preceding claims, **characterized in that** the one or more guide means (600) is/are, at least for rotation-inhibiting axial guidance of the sliding seat (204), configured to be displaceable in a circumferentially elastic manner, in particular displaceable in a circumferentially and radially elastic manner.

8. Lawnmower (11), at least according to one of the preceding claims, **characterized in that** the one or more guide means (600) is/are attached in a lug-like manner to the guide element (20), in particular is/are attached in a circumferentially and radially elastically displaceable manner to the guide element (20).

9. Lawnmower (11), at least according to one of the preceding claims, **characterized in that** the one or more guide means (600) is/are formed as a guide profile (60), in particular as a guide rail, in particular as a sliding guide rail.

10. Lawnmower (11), at least according to one of the preceding claims, **characterized in that**, on the sliding seat (204), at least one, preferably multiple, in particular corresponding guide means (610), which is/are non-elastically displaceable in a circumferential direction (25) and/or in a radial direction relative to the height-adjustment axis (590), in particular guide means (610) formed as a guide profile (61), in particular as a guide rail, preferably as a sliding guide rail.

11. Lawnmower (11), at least according to one of the preceding claims, **characterized in that** the one or more guide means (600, 610) is/are formed in one piece with the guide element (20) or the sliding seat (204).

## Revendications

1. Tondeuse à gazon (11), notamment tondeuse à gazon autonome (11), présentant au moins un châssis (45), un moteur (15) pour l'entraînement d'un dispositif de coupe (200) et un dispositif de réglage en hauteur (16) pour un déplacement du dispositif de coupe (200) et du moteur (15), notamment d'un carter de réception de moteur (36) recevant le moteur (15), par rapport au châssis (45), au moins pour un réglage d'une hauteur de travail (h) du dispositif de coupe (200) par rapport au châssis (45), notamment pour un réglage d'une hauteur de coupe (s) d'un outil de coupe (18) du dispositif de coupe (200) ; entre le châssis (45) et une unité d'appui (100) ou un siège coulissant (204) pour maintenir et soutenir le moteur (15) et/ou pour maintenir et soutenir un carter de réception de moteur (36) recevant le moteur (15), des moyens de guidage (600) pour le guidage anti-rotation et axial de l'unité d'appui (100) ou du siège coulissant (204) par rapport au châssis (45) autour de ou dans la direction de l'axe de réglage en hauteur (590) étant prévus, **caractérisée en ce que** le ou les moyens de guidage (600) sont réalisés sous forme déplaçables élastiquement dans la direction circonférentielle autour de l'axe de réglage en hauteur (590), les moyens de guidage (600) faisant de préférence partie d'un dispositif de guidage (19) et/ou d'au moins un élément de guidage (20).

2. Tondeuse à gazon, au moins selon la revendication 1, **caractérisée en ce que** la tondeuse à gazon (11) comprend un dispositif de guidage (19) réalisé séparément du châssis (45), qui présente au moins un élément de guidage (20) qui est réalisé par rapport à un axe de réglage en hauteur (590) du dispositif de réglage en hauteur (16) pour le guidage axial au moins anti-rotation d'un siège coulissant (204) et pour le guidage en rotation au moins anti-axial d'un corps rotatif (118) du dispositif de réglage en hauteur (16).

3. Tondeuse à gazon (11), au moins selon l'une quelconque des revendications précédentes, **caractérisée en ce que** le dispositif de guidage (19) présente plusieurs, notamment deux éléments de guidage (19), notamment des éléments de guidage (20) opposés les uns aux autres par rapport à l'axe de réglage en hauteur (590) .

4. Tondeuse à gazon (11), au moins selon l'une quelconque des revendications précédentes, **caractérisée en ce que** le dispositif de guidage (19) ou le ou les éléments de guidage (20) peuvent être reliés de manière fixe au châssis (45), notamment sont reliés par vissage et/ou par complémentarité de formes.

5. Tondeuse à gazon (11), au moins selon l'une quelconque des revendications précédentes, **caractérisée en ce que** le dispositif de guidage (19) est prévu pour la réception, avec espacement et/ou avec découplage en vibrations, du dispositif de réglage en hauteur (16) sur le châssis (45), notamment pour la réception avec soutien et avec appui, avec espacement et/ou avec découplage en vibrations, du dispositif de réglage en hauteur (16) sur le châssis (45), de préférence pour la réception avec soutien et avec appui, avec espacement et/ou avec découplage en vibrations, au moins du dispositif de réglage en hauteur (16), du moteur (15) et du dispositif de coupe (200) sur le châssis (45).

6. Tondeuse à gazon (11), au moins selon l'une quelconque des revendications précédentes, **caractérisée en ce que** le dispositif de guidage (19) ou le ou les élément de guidage (20) présentent au moins un, de préférence plusieurs, moyens de guidage (112, 600) déplaçables élastiquement, notamment des moyens de guidage (112, 600) déplaçables élastiquement axialement, radialement et/ou circonférentiellement, notamment réalisés pour agir de manière à empêcher le déplacement dans la direction axiale ou radiale et/ou dans la direction circonférentielle (25) par rapport à un axe de réglage en hauteur (590) du dispositif de réglage en hauteur (16) au moins sur un corps rotatif (118) et/ou un siège coulissant (204) du dispositif de réglage en hauteur (16).

7. Tondeuse à gazon (11), au moins selon l'une quelconque des revendications précédentes, **caractérisée en ce que** le ou les moyens de guidage (600) sont réalisés sous forme déplaçable élastiquement en circonférence, notamment sous forme déplaçable élastiquement en circonférence et radialement, au moins pour le guidage axial anti-rotation du siège coulissant (204).

8. Tondeuse à gazon (11), au moins selon l'une quelconque des revendications précédentes, **caractérisée en ce que** le ou les moyens de guidage (600) sont reliés à l'élément de guidage (20) à la manière d'une patte, notamment sont reliés à l'élément de guidage (20) de manière déplaçable élastiquement en circonférence et radialement.

9. Tondeuse à gazon (11), au moins selon l'une quelconque des revendications précédentes, **caractérisée en ce que** le ou les moyens de guidage (600) sont réalisés sous forme de profilé de guidage (60), notamment sous forme de rail de guidage, notamment sous forme de rail de guidage coulissant.

10. Tondeuse à gazon (11), au moins selon l'une quelconque des revendications précédentes, **caractérisée en ce que**, sur le siège coulissant (204), au moins un, de préférence plusieurs moyens de guidage (610), notamment correspondants, déplaçables non élastiquement dans la direction circonférentielle (25) et/ou dans la direction radiale par rapport à l'axe de réglage en hauteur (590), notamment des moyens de guidage (610) réalisés sous forme de profilé de guidage (61), notamment sous forme de rail de guidage, de préférence sous forme de rail de guidage coulissant.

11. Tondeuse à gazon (11), au moins selon l'une quelconque des revendications précédentes, **caractérisée en ce que** le ou les moyens de guidage (600, 610) sont réalisés d'une seule pièce avec l'élément de guidage (20) ou le siège coulissant (204).
